# EUROPEAN PATENT APPLICATION

(11) **EP 4 414 443 A1**
(43) Date of publication of application: **14.08.2024**
(21) Application number: 23155846.1
(22) Date of filing: 09.02.2023
(51) Int. Cl.: C11D 3/386

(54) **CLEANING COMPOSITION COMPRISING POLYESTERASE**

(71) Applicant: Henkel AG & Co. KGaA, 40589 Düsseldorf (DE)
(72) Inventor: Islam, Shohana, 40474 Düsseldorf (DE); Wieland, Susanne, 41541 Zons/Dormagen (DE); Degering, Christian, 40699 Erkrath (DE); Bode, Nicole, 40627 Düsseldorf (DE); Kapitza, Dorothea, 40595 Düsseldorf (DE); van Lier, Margret, 40721 Hilden (DE); Schroeter, Hanka, 40595 Düsseldorf (DE)

(57) **Abstract**

The present invention relates to cleaning compositions comprising at least one polyesterase. In particular the present invention relates to cleaning compositions, preferably liquid laundry detergent composition, comprising at least one polyesterase, as defined herein, at least one surfactant, a builder system, optionally, at least one cellulase, optionally, sodium benzoate, optionally, at least one further enzyme, and optionally, at least one performance polymer. The compositions described herein are suitable for use in cleaning processes and include detergent compositions, such as laundry detergent compositions, in particular liquid laundry detergent compositions. The present invention further relates to a method for cleaning textiles and to the use of such compositions according to the invention for reducing and/or preventing pilling effects, and/or for reducing and/or preventing graying effects, and/or for increasing color vibrancy, and/or for increasing the anti-graying effect of cleaning composition, and/or for increasing the anti-/de-pilling effect of cleaning compositions.

## Description

The present invention relates to cleaning compositions comprising at least one polyesterase. The compositions described herein are suitable for use in cleaning processes and include detergent compositions, such as laundry detergent compositions, in particular liquid laundry detergent compositions. The present invention further relates to a method for cleaning textiles and to the use of such compositions according to the invention for reducing and/or preventing pilling effects, and/or for reducing and/or preventing graying effects, and/or for increasing color vibrancy, and/or for increasing the anti-graying effect of cleaning composition, and/or for increasing the anti-/de-pilling effect of cleaning compositions.

Enzymes have been used in detergents for decades, wherein most commercially relevant are the proteases and amylases effectively removing protein and starch related soiling, respectively. However, most household care related soiling is a complex mixture of various organic matters. Consequently, stain removal requires different enzyme activity, which vary depending on the specific stain targeted. Beside to cleaning effects of specific enzymes, there are usually further enzymes included, which relate to fabric care, e.g., anti-gray and/or anti-pilling.

If washed several times, all types of textiles will pill overtime. Pilling refers to the formation of nodules or lint in fabrics. These small pieces of lint are particularly common with short-fiber fabrics. With long-fiber and twisted fibers, however, there is less pilling. Generally, these nodules are caused by loose fibers in the fabric or those that have come loose from the fabric. Due to their smooth surface, synthetic fibers are prone to pilling more than natural fibers, because synthetic fibers can be released from the fabric faster than rough natural fibers. In the case of wool fabrics, these fibers "mat" mainly due to mechanical friction and form nodules on the surface.

The main impact of pilling is an adverse visual effect. Due to the formation of nodules on the surface, fabrics quickly look used and older than they are. In addition, colored textiles appear less brilliant. In contrast, the functionality of the fabric is hardly or not at all impaired. Pilling takes place in particular at places that are subject to high mechanical stress, usually in the shoulder and waist region. Due to the continuous thinning of the material, these stressed regions are particularly at risk of forming holes or even tearing. The undesirable pilling has the consequence that correspondingly impaired textiles are rejected and thrown away by consumers more quickly than would be necessary on the basis of the functionality of the textile.

Furthermore, textiles tend to turn gray when washed. This is because both dirt and detached pigments are released from colored clothes in the washing process. Although attempts are made to keep said dirt and pigments in the washing liquor by means of various washing agent ingredients, it is often not possible to prevent the dirt/pigments from being deposited on the clothing and remaining there. This is the so-called graying effect. This is particularly pronounced for some synthetic fibers such as polyamide, but also polyester.

A technical solution to reduce and/or prevent pilling and/or graying effects is well known for cotton textiles, e.g., cellulases are used in cleaning composition to reduce the pilling effect (DE 69632910 T3). This means that cellulases are used in the washing composition to show anti-pilling or anti-graying effects and thus ensure that clothes look like new for longer. However, cellulases only work on cotton textiles. For other textiles, such as polyester or cotton-polyester-blend textiles, cellulases cannot be used. In WO 2023/274922 a lipolytic enzyme having polyesterase activity and its use in cleaning composition is described. However, there is still demand for improved solutions that reduce and/or prevent pilling and/or graying of textiles, in particular textiles that consist of or comprise synthetic fibers such as polyester, in order to keep clothes looking new for as long as possible, i.e., the colors should remain strong, the shape should be preserved and the surfaces should remain smooth and undamaged.

Various enzymes, such as lipolytic enzymes (also known as lipases) are able to catalyze the hydrolysis of a variety of polymers, including polyesters. Some of these enzymes are being investigated for use in a number of industrial applications, such as detergents for laundry and dishwashing applications. The use of such enzymes is of particular interest for hydrolyzing polyesters, such as polyethylene terephthalate (PET).

There is a continuing need for improving hitherto known cleaning compositions, in particular with respect to its anti-pilling and/or anti-graying effects. In particular there is need for solutions to improve anti-pilling and/or anti-gray effects in cleaning compositions for use on textiles comprising or consisting of polyester, cotton, polyamide, viscose and/or blends thereof. In this respect, there is still demand for improved cleaning compositions comprising polyesterase with respect to textile care performance (i.e., anti-graying, anti-/de-pilling, color vibrancy and the like) and stability of enzyme. In particular, there is still demand for improved cleaning compositions comprising polyesterase and cellulase with respect to textile care performance (i.e., anti-graying, anti-/de-pilling, color vibrancy and the like) and stability of enzyme.

Surprisingly, the inventors of the present invention have found that the lipolytic enzymes having polyesterase activity (herein referred to as "polyesterases") described herein are active under washing process conditions and have various nourishing properties for textiles consisting of or comprising polyester, such as polyethylene terephthalate (PET). This is surprising insofar as such enzymes known to date are more active at higher temperatures (≥ 60°C) and, moreover, are only able to degrade polyester/PET very slowly. However, the polyesterases described herein demonstrate rapid polyester degradation at 40°C. In particular the polyesterases described herein are active in a wide vary of cleaning compositions. Cleaning compositions according to the invention and comprising polyesterases described herein effectively prevent pilling on new polyester textiles ("anti-pilling"), reduce pills that have already been formed ("de-pilling"), also known as "renew" effect, prevent and/or reduce graying of white laundry and fading/graying of colored laundry, and thus increasing color vibrancy of washed textiles. It has also been found that, with the appropriate dosage, all of these positive washing properties can be achieved without significantly damaging the fiber. Because the textiles look new longer, they are worn longer and are replaced less quickly. This leads to a reduction in the CO₂ footprint, since less polyester is used.

Therefore, in a first aspect, the present invention is directed to a cleaning composition, preferably liquid laundry detergent composition, comprising
(A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93% or 94% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
(B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
(C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof;
(D) optionally, at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition;
(E) optionally, sodium benzoate, preferably in an amount of 0.01 to 1 wt.%, more preferably 0.05 to 0.5 wt.%, based on the total weight of the cleaning composition;
(F) optionally, at least one further enzyme, preferably in an amount of 0.01 to 10 wt.%, more preferably 0.1 to 8 wt.%, particularly preferred 0.2 to 6 wt.%, based on active protein and based on the total weight of the cleaning composition, wherein said enzyme is selected from the group consisting of protease, amylase, lipase, mannanase, pectate lyase or mixtures thereof;
(G) optionally, at least one performance polymer, preferably in an amount of 0.1 to 1.0 wt.%, more preferably 0.15 to 0.8 wt.%, particularly preferably 0.3 to 0.6 wt.%, based on total weight of the cleaning composition, wherein the performance polymer is selected from the group consisting of soil release polymer, dye transfer inhibitor, performance booster, performance booster for bleachable stains, anti-redeposition agents, dispersants, graying inhibitor, and mixtures thereof.

In various embodiments, the polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93% or 94% identity to the full-length amino acid sequence of SEQ ID NO:1 and comprises a combination of substitutions selected from the group consisting of R40T-T64V-T117L-G175E-T177N-F180P-Y182A-R190L-S205G-F207L-S212D-F226L-Y239I-L249P-S252I-L258F, R40T-G61D-T64V-S70E-T117L-T177N-I178L-F180P-Y182A-R190L-S205G-F207T-S212D-F226L-Q227H-A236P-Y239I-L249P-S252I-E254Q-L258F, R40T-T64V-S70E-T117L-T177N-I178L-F180P-Y182A-R190L-S205G-F207T-S212D-F226L-A236P-Y2391-L249P-S2521-E254Q-L258F, R40A-T64V-S70E-T117L-T177N-I178L-F180P-Y182A-R190L-S205G-F207T-S212D-F226L-A236P-Y239I-L249P-S252I-E254Q-L258F, R40T-T64V-S70E-T117L-Q161H-T177N-I178L-F180P-Y182A-R190L-S205G-F207T-S212D-F226L-A236P-Y239I-L249P-S252I-E254Q-L258F, R40T-T64V-S70E-T117L-G175A-T177N-I178L-F180P-Y182A-R190L-S205G-F207T-S212D-F226L-A236P-Y239I-L249P-S252I-E254Q-L258F, R40T-T64V-S70E-T117L-T177N-I178L-F180P-Y182A-R190L-S205G-F207T-V210I-S212D-F226L-A236P-Y239I-L249P-S252I-E254Q-L258F, R40T-T64V-S70E-T117L-T177N-I178L-F180P-Y182A-R190L-S205G-F207T-S212D-F226L-A236P-Y239I-S244E-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-R256K-L258F, V14S-R40A-G59Y-G61D-T64V-A66D-S70E-T117L-Q161H-T177R-I178L-F180P-Y182A-R190L-S205G-F207T-V210I-S212D-F226L-A236P-Y239I-L249P-S252I-E254Q-R256K-L258F, V14S-R40A-G59Y-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, R40T-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, and V14S-R40A-G59Y-G61D-T64V-A66D-S70E-T117L-Q161H-G175A-T177R-I178L-F180P-Y182A-R190L-S205G-F207T-V210I-S212D-F226L-A236P-Y239I-L249P-S252I-E254Q-R256K-L258F, wherein the positions are numbered by reference to the amino acid sequence of SEQ ID NO:1.

In various embodiments, the polyesterase has polyesterase activity, in particular hydrolytic activity on a polyester selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof.

In various embodiments, the cleaning composition has a pH of 5.0 to 10.0, preferably 5.0 to 9.0, more preferably 5.5 to 9.0, even more preferably 5.5 to 8.5, as measured in 1 wt.% aqueous solution at 20°C.

In various embodiments, the cleaning composition comprises
(i) 2 to 20 wt.%, preferably 3 to 17 wt.% anionic surfactants,
(ii) 1 to 10 wt.%, preferably 3 to 8 wt.%, non-ionic surfactants,
(iii) 0 to 1 wt.%, preferably 0 to 0.5 wt.%, soap, and
(iv) 0 to 5 wt.%, preferably 0 to 3 wt.% fatty acids.

In various embodiments, the cleaning composition comprises less than 10 wt.% LAS, preferably less than 6 wt.%, more preferably less than 3 wt.%, even more preferably being substantially free of LAS, particularly preferably the composition being free of LAS.

In various embodiments, the builder system comprises
(i) 0 to 10 wt.%, preferably 1 to 4 wt.% citric acid and/or citrate, preferably alkali citrate,
(ii) 0 to 40 wt.%, preferably 0 to 15 wt.%, more preferably 1 to 3 wt.%, alkali carbonate, preferably sodium carbonate,
(iii) 0 to 20 wt.%, preferably 3 to 10 wt.% alkali silicate,
(iv) 0 to 10 wt.%, preferably 0.5 to 2 wt.%, phosphonic acid and/or alkali phosphonate, particular preferably HEDP and/or DTPMP, and/or
(v) 0 to 10 wt.%, preferably 0.5 to 3 wt.%, amino polycarboxylic acids, preferably MGDA and/or GLDA.

In various embodiments, the cleaning composition is substantially free of phosphonates, preferably being free of phosphonates, in particular free of HEDP and/or DTPMP.

In various embodiments, the cleaning composition is substantially free of boron-containing components, preferably comprising less than 1 wt.% boron-containing components, more preferably less than 0.5 wt.%, even more preferably being free of boron-containing components.

In various embodiments, the cleaning composition is present in solid or liquid, preferably liquid, form; and/or it is in unit dose, in particular pouch or caps, more preferably liquid washing compositions, particularly preferably in unit dose form.

In a further aspect, the invention is directed to a method of cleaning an item comprising:
(a) providing a cleaning composition according to the invention; and
(b) washing the item with the composition,
wherein the item is selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (*Gossypium*)*,* or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.

In a further aspect, the invention is directed to the use of a cleaning composition according to the invention for cleaning an item, and/or for reducing pilling effects and/or preventing pilling effects on an item, and/or for reducing graying effects and/or preventing graying effects on an item, and/or for increasing color vibrancy on an item, and/or for increasing anti-graying effect of the cleaning composition, and/or for increasing anti- and/or de-pilling effect of cleaning composition,
wherein the item is selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (*Gossypium*)*,* or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.

In various embodiments, the textile is selected from the group consisting of cotton textiles, polyester textiles, viscose textiles, polyamide textiles, cotton-polyester-blend textiles, cotton-polyamide-blend textile, textiles comprising elastane, in particular preferably cotton-polyester blend textiles, cotton-polyamide-blend textile, viscose, and polyamide-elastane-blend textiles.

When in the following reference is made to the enzyme according to the invention, the terms "lipolytic enzyme having polyesterase activity" or "polyesterase" or the like are meant to be used equivalently. Such enzymes used in cleaning compositions according to the invention are characterized by having polyester degrading activity, as described herein.

In the context of the present invention an enzyme having "polyesterase activity" refers to an enzyme that has significant capability to catalyze the hydrolysis and/or surface modification of polyester, as described herein.

If not indicated otherwise, all references to percentages in relation to the compositions disclosed herein relate to wt.% relative to the total weight of the respective composition. It is understood that when reference is made to compositions that comprise enzymes as defined herein, the respective composition comprises at least one of each of the specified enzymes but can also comprise two or more of each enzyme type, such as two or more lipolytic enzymes having polyesterase activity (polyesterases).

Unless defined otherwise herein, all technical and scientific terms used herein have the same meaning as commonly understood by one of ordinary skill in the art to which this invention pertains. Although any methods and materials similar or equivalent to those described herein find use in the practice of the present invention, the preferred methods and materials are described herein. Accordingly, the terms defined immediately below are more fully described by reference to the specification as a whole. Also, as used herein, the singular terms "a", "an" and "the" include the plural reference unless the context clearly indicates otherwise. It is to be understood that this invention is not limited to the particular methodology, protocols, and reagents described herein, as these may vary, depending upon the context they are used by those of skill in the art.

It is intended that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

When in the following reference is made to the compositions according to the invention, the terms "cleaning composition", "detergent composition", "laundry detergent composition", "laundry detergent", "detergent", "washing composition", "washing agent", "composition" or "agent" or the like are meant to be understood to be used equivalently. As used herein, the term "detergent composition" or "cleaning composition", includes unless otherwise indicated, granular or powder-form all-purpose, light-duty washing agents or heavy-duty washing agents, especially cleaning detergents; liquid, gel or paste-form all-purpose washing agents, especially the so-called heavy-duty liquid (HDL) and light-duty liquid (LDL) types; liquid fine-fabric detergents; as well as cleaning auxiliaries such as bleach additives and "stain-stick" or pre-treat types. The terms "detergent composition" and "detergent formulation" are used in reference to mixtures which are intended for use in a wash medium for the cleaning of soiled objects. In some aspects, the term is used in reference to laundering fabrics and/or garments (e.g., "laundry detergents"). The terms "fabric conditioning composition", "fabric finisher" or "fabric care composition", as interchangeably used herein, are meant to include all compositions that are used to impart certain properties to fabrics and textiles treated therewith, such as softeners, anti-wrinkle compositions, perfuming compositions and the like. It is not intended that the present invention be limited to any particular detergent formulation or composition, unless otherwise indicated by the definition provided herein. The term "detergent composition" is not intended to be limited to compositions that comprise surfactants. It is intended that in addition to the variants according to the invention, the term encompasses detergents that may comprise, e.g., surfactants, builders, chelators or chelating agents, bleach system or bleach components, polymers, fabric conditioners, foam boosters, suds suppressors, dyes, perfume, tannish inhibitors, optical brighteners, bactericides, fungicides, soil suspending agents, anti-corrosion agents, enzyme inhibitors or stabilizers, enzyme activators, transferase(s), hydrolytic enzymes, oxidoreductases, bluing agents and fluorescent dyes, anti-oxidants, and solubilizers.

As used herein, the term "cotton" refers to *Gossypium hirsutum* and includes all plant varieties that can be bred with cotton, including wild cotton species as well as those plants belonging to *Gossypium* that permit breeding between species. In the context of the invention, the term "cotton" does not only relate to the plant *Gossypium* but also to the cellulosic material derived from the plant which can be processed to fibers, yarns, fabrics, textiles and the like as pertinent to the person skilled in the art.

As used herein, the term "effective amount of enzyme" refers to the quantity of enzyme necessary to achieve the enzymatic activity required in the specific application, e.g., in a defined detergent composition. Such effective amounts are readily ascertained by one of ordinary skill in the art and are based on many factors, such as the particular enzyme used, the cleaning application, the specific composition of the detergent composition, and whether a liquid or dry (e.g., granular, bar) composition is required, and the like.

As used herein, the term "fabric" encompasses any textile material. Thus, it is intended that the term encompass garments, as well as fabrics, yarns, fibers, filaments, woven materials, non-woven materials, knit materials, natural materials, synthetic materials, and any other textile material. As used herein, the term "textile" refers to any textile material including yarns, yarn intermediates, fibers, non-woven materials, natural materials, synthetic materials, and any other textile material, fabrics made of these materials and products made from fabrics (e.g., garments and other articles). The textile or fabric may be in the form of knits, wovens, denims, non-wovens, felts, yarns, and toweling. The textile may include cellulose based such as natural cellulosics, including cotton, flax/linen, jute, ramie, sisal or coir or manmade cellulosics (e.g., originating from wood pulp) including viscose/rayon, cellulose acetate fibers (tricell), lyocell or blends thereof. The textile or fabric may also be non-cellulose based such as natural polyamides including wool, camel, cashmere, mohair, rabbit and silk or synthetic polymers such as polyamide, e.g., nylon, perlon, aramid, polyester, acrylic, polypropylene and spandex/elastane, or blends thereof as well as blends of cellulose based and non-cellulose based fibers. Examples of blends are blends of cotton and/or rayon/viscose with one or more companion material such as wool, synthetic fiber (e.g., polyamide fiber, acrylic fiber, polyester fiber, polyvinyl chloride fiber, polyurethane fiber, polyurea fiber, aramid fiber), and/or cellulose-containing fiber (e.g., rayon/viscose, ramie, flax/linen, jute, cellulose acetate fiber, lyocell). Fabric may be conventional washable laundry, e.g., stained household laundry. When the term "fabric" or "garment" is used, it is intended to include the broader term "textiles" as well. In the context of the present application, the term "textile" is used interchangeably with "fabric" and "cloth". In various embodiments, textiles include those materials that include at least one polyester.

The term "graying" or "greying", as used herein, refers to the detachment and reattachment of dirt to a textile during a wash cycle. The term "anti-gray performance" or "anti-graying effect" or the like, as used herein, therefore, refers to keeping the dirt that has been detached from the fiber during the washing of textiles suspended in the liquor, thus preventing the dirt from being reattached to the textile. Such performance can be determined by methods known in the prior art. For example, textile from a test wash and reference textiles may be examined and evaluated by visual inspection. Alternatively, an evaluation may be made, e.g., by the absorption or extinction of light measured by an appropriate detector (e.g., photometer). In preferred embodiments of the invention, anti-graying performance means that textiles washed with a detergent under test exhibit no more than 90%, no more than 80%, no more than 70%, no more than 60%, no more than 50%, no more than 40%, no more than 30%, no more than 20%, no more than 10%, or no more than 5% of the graying exhibited by textiles washed with a comparable reference detergent (e.g., without cellulase and/or without polyesterase or containing a known reference cellulase and/or polyesterase).

As used herein, the term "laundering" includes both household laundering and industrial laundering and means the process of treating textiles with a solution comprising a cleaning or detergent composition as provided herein. The laundering process can be conducted using, e.g., a household or an industrial washing machine or can be conducted by hand. Such "laundering" is also included in the term "cleaning", as used herein. "Fabric conditioning" includes all types of processes of treating textiles with a solution comprising a fabric conditioning composition as provided herein. Such treating can occur in a household or an industrial washing machine or can be conducted by hand.

As used herein, the term "mature polypeptide" means a polypeptide in its final form following translation and any post-translational modifications, such as N-terminal processing, C-terminal truncation, glycosylation, phosphorylation, etc.

As used herein, the term "polyamide" refers to synthetic polymers like polyamide 6.6 (PA 6.6; nylon) which is formed from hexamethylene diamine and adipic acid through polycondensation and polyamide 6 (PA 6; perlon) which is made from caprolactam through polymerization.

As used herein, the term "polyester-containing material" or "polyester-containing product" refers to a product, such as a textile, fabric, or plastic product, comprising at least one polyester in crystalline, semi-crystalline, or substantially amorphous forms. In various embodiments, the polyester-containing material refers to a textile or fabric or fibers comprising at least one polyester. In various embodiments, the polyester-containing material refers to a textile or fabric or fibers consisting of at least one polyester. In various embodiments, the polyester-containing material refers to a textile or fabric or fibers comprising besides at least one polyester further component(s), like e.g., cellulosic materials or polyamides or synthetic polymers. In various embodiments, the polyester-containing material refers to a textile or fabric or fibers comprising at least one polyester and at least one cellulosic material, in particular relating to, e.g., cotton-polyester blends.

The term "polyester", as used herein, include polymers that contain at least one ester repeating unit in their main chain polymers, i.e., any ester bond-containing polymer. In their simplest form, polyesters are produced by polycondensation reaction of a glycol (diol) with a dicarboxylic acid (diacid) or its diester. Polyesters include naturally occurring chemicals, such as in the cutin of plant cuticles, as well as synthetics through step-growth polymerization such as polybutyrate. Such polyesters include aliphatic and aromatic polyesters. The aliphatic polyesters include: polyhydroxy alkanoates (PHA), which can be divided into polyhydroxy butyrate (PHB), polyhydroxy valerate (PHV), polyhydroxy hexanoate (PHH), and their copolymers; polylactide (PLA); poly(ε-caprolactone) (PCL); polybutylene succinate (PBS) and its derivative poly(butylene succinate adipate) (PBSA). The aromatic polyesters include modified polyethylene terephthalate) (PET) such as poly(butylene adipate/terephthalate) (PBAT) and poly(tetramethylene adipate-co-terephthalate) (PTMAT); and aliphatic-aromatic co-polyesters (AAC). As used herein, the term "polyester" in particular includes, but is not limited to, those polyesters selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof.

As used herein, the term "variant polypeptide" refers to a polypeptide comprising an amino acid sequence that differs in at least one amino acid residue from the amino acid sequence of a parent or reference polypeptide (including but not limited to wild-type polypeptides). In various embodiments, the parent polypeptide for use herein comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99% or 100% sequence identity to SEQ ID NO:1.

As used herein, the term "wash cycle" refers to a washing operation in which textiles are immersed in a wash liquor, mechanical action of some kind is applied to the textile to release stains or to facilitate flow of wash liquor in and out of the textile and finally the superfluous wash liquor is removed. After one or more wash cycles, the textile is rinsed and dried.

As used herein, the term "wash liquor" refers to the solution or mixture of water and detergent components optionally including polyesterases as provided herein.

The present invention relates to cleaning compositions comprising lipolytic enzymes having hydrolytic activity on at least one polyester. In particular, the present invention relates to cleaning compositions comprising lipolytic enzymes having polyesterase activity (polyesterases). The present invention relates to cleaning compositions comprising lipolytic enzymes, which are polyesterases (lipolytic enzyme having polyesterase activity).

As used herein, the term "lipolytic enzyme having polyesterase activity" or "polyesterase" or "PETase" refers to an enzyme that has significant capability to catalyze the hydrolysis and/or surface modification of polyester. Suitable polyesterases may be isolated from animal, plant, fungal and bacterial sources. The aforementioned microorganisms may be, in addition to being isolated from wild strains, may be isolated from any of mutant strains obtained by UV irradiation, N-methyl-N'-nitroso guanidine (NTG) treatment, ethyl methane sulfonate (EMS) treatment, nitrous acid treatment, acridine treatment or the like, recombinant strains induced by the genetic engineering procedures such as cell fusion and gene recombination and so forth. The polyesterase may catalyze the hydrolysis and/or surface modification of a polyester selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof.

As used herein, "% identity or percent identity" refers to sequence similarity. The identity of nucleic acid or amino acid sequences is determined by a sequence comparison. This sequence comparison is based on the BLAST algorithm established and commonly used in the prior art (e.g., Altschul et al., Basic local alignment search tool, J. Mol. Biol., 1990, 215: 403-410, und Altschul et al., Gapped BLAST and PSI-BLAST: a new generation of protein database search programs, Nucleic Acids Res., 1997, 25: 3389-3402) and in principle occurs by associating similar sequences of nucleotides or amino acids in the nucleic acid or amino acid sequences. A tabular association of the positions concerned is referred to as alignment. Another algorithm available in the prior art is the FASTA algorithm. Sequence comparisons (alignments), in particular multiple sequence comparisons, are created using computer programs. The Clustal series (e.g., Chenna et al., Multiple sequence alignment with the Clustal series of programs, Nucleic Acid Res., 2003, 31: 3497-3500), T-Coffee (e.g., Notredame et al., T-Coffee: A novel method for multiple sequence alignments, J. Mol. Biol., 2000, 302: 205-217) or programs based on these programs or algorithms are frequently used, for example. Sequence comparisons (alignments) using the computer program Vector NTI^{®} Suite 10.3 (Invitrogen Corporation, 1600 Faraday Avenue, Carlsbad, California, USA) with the predetermined, default parameters, and the AlignX module of which for sequence comparisons is based on ClustalW, or Clone Manager 10 (using Scoring Matrix BLOSUM 62 for sequence alignment on amino acid level), are also possible. Unless stated otherwise, the sequence identity given herein is determined by the BLAST algorithm.

Such a comparison also allows an indication of the similarity of the compared sequences to each other. It is usually expressed as a percentage of identity, i.e., the proportion of identical nucleotides or amino acid residues at the same positions or at positions corresponding to each other in an alignment. In the case of amino acid sequences, the broader concept of homology also encompasses conserved amino acid substitutions, i.e., amino acids with similar chemical activity, since these usually have similar chemical activities within the protein. Therefore, the similarity of the compared sequences may also be indicated percent homology or percent similarity. Identity and/or homology indications can be made over entire polypeptides or genes or only over individual regions. Homologous or identical regions of different nucleic acid or amino acid sequences are therefore defined by matches in the sequences. Such regions often have identical functions. They may be small and comprise only a few nucleotides or amino acids. Often, such small regions perform essential functions for the overall activity of the protein. It may therefore be useful to relate sequence matches only to individual, possibly small, regions. However, unless otherwise indicated, identity or homology statements in the present application refer to the total length of the nucleic acid or amino acid sequence indicated in each case.

Therefore, in the context of the present invention, the indication that an amino acid position corresponds to a numerically designated position in SEQ ID NO:1 means that the corresponding position is assigned to the numerically designated position in SEQ ID NO:1 in an alignment as defined above.

For the description of substitutions involving exactly one amino acid position (amino acid substitutions), the following convention is used herein: first, the naturally occurring amino acid is designated in terms of the internationally used one-letter code, followed by the corresponding sequence position, and finally the inserted amino acid. Multiple or alternative substitutions within the same polypeptide chain are separated by slashes. "130D/V" thus means that position 130 is mutated to D or V. For insertions, additional amino acids are named after the sequence position. For deletions, the missing amino acid is replaced by a symbol, e.g., an asterisk or a dash, or a Δ is indicated before the corresponding position. For example, P9T describes the substitution of proline at position 9 by threonine, P9TH describes the insertion of histidine after the amino acid threonine at position 9, and P9* or ΔP9 describes the deletion of proline at position 9. This nomenclature is known to a person skilled in the art of enzyme technology.

It is possible for a person skilled in the art, via methods generally known today, such as chemical synthesis or polymerase chain reaction (PCR) in conjunction with standard molecular biological and/or protein chemical methods, to produce the corresponding nucleic acids up to complete genes on the basis of known DNA and/or amino acid sequences. Such methods are known, e.g., from Sambrook, J., Fritsch, E.F. and Maniatis, T., 2001, Molecular cloning: a laboratory manual, 3rd Edition Cold Spring Laboratory Press.

In various embodiments, the polyesterase used in cleaning compositions according to the invention comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99% or 100% sequence identity to SEQ ID NO:1, and having polyesterase activity.

In various embodiments, the polyesterase used in cleaning compositions according to the invention comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93% or 94% identity to the full length amino acid sequence of SEQ ID NO:1, comprising the substitutions X64V-X117L-X177N-X178L-X180P-X182A-X190L-X205G-X212D-X226L-X239I-X249P-X252I-X258F or X64V-X117L-X177R-X178L-X180P-X182A-X190L-X205G-X212D-X226L-X239I-X249P-X252I-X258F, further comprising at least one additional substitution selected from the group consisting of X14S, X40A, X40T, X59Y, X61 D, X66D, X70E, X161 H, X175A, X175E, X207L, X207T, X210I, X227H, X236P, X244E, X254Q, and X256K, where the positions are numbered by reference to the amino acid sequence of SEQ ID NO:1, and having polyesterase activity.

In various embodiments, the polyesterase used in cleaning compositions according to the invention comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93% or 94% identity to the full length amino acid sequence of SEQ ID NO:1, comprising the substitutions X64V-X117L-X177N-X178L-X180P-X182A-X190L-X205G-X212D-X226L-X239I-X249P-X252I-X258F, further comprising at least one additional substitution selected from the group consisting of X14S, X40A, X40T, X59Y, X61 D, X66D, X70E, X161 H, X175A, X175E, X207L, X207T, X210I, X227H, X236P, X244E, X254Q, and X256K, where the positions are numbered by reference to the amino acid sequence of SEQ ID NO:1, and having polyesterase activity.

In various embodiments, the polyesterase used in cleaning compositions according to the invention comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93% or 94% identity to the full length amino acid sequence of SEQ ID NO:1, comprising the substitutions X64V-X117L-X177R-X178L-X180P-X182A-X190L-X205G-X212D-X226L-X239I-X249P-X252I-X258F, further comprising at least one additional substitution selected from the group consisting of X14S, X40A, X40T, X59Y, X61D, X66D, X70E, X161H, X175A, X175E, X207L, X207T, X210I, X227H, X236P, X244E, X254Q, and X256K, where the positions are numbered by reference to the amino acid sequence of SEQ ID NO:1, and having polyesterase activity.

In various embodiments, the polyesterase used in cleaning compositions according to the invention comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93% or 94% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-1178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.

In various embodiments, the polyesterase used in cleaning compositions according to the invention comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93% or 94% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.

In various embodiments, the polyesterase used in cleaning compositions according to the invention comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93% or 94% identity to the full length amino acid sequence of SEQ ID NO:1, comprising the substitutions T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.

In various embodiments, the polyesterase used in cleaning compositions according to the invention comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93% or 94% identity to the full length amino acid sequence of SEQ ID NO:1 and comprises a combination of mutations selected from the group consisting of R40T-T64V-T117L-G175E-T177N-F180P-Y182A-R190L-S205G-F207L-S212D-F226L-Y239I-L249P-S252I-L258F, R40T-G61D-T64V-S70E-T117L-T177N-1178L-F180P-Y182A-R190L-S205G-F207T-S212D-F226L-Q227H-A236P-Y239I-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-L258F, R40A-T64V-S70E-T117L-T177N-I178L-F180P-Y182A-R190L-S205G-F207T-S212D-F226L-A236P-Y239I-L249P-S252I-E254Q-L258F, R40T-T64V-S70E-T117L-Q161H-T177N-I178L-F180P-Y182A-R190L-S205G-F207T-S212D-F226L-A236P-Y239I-L249P-S252I-E254Q-L258F, R40T-T64V-S70E-T117L-G175A-T177N-I178L-F180P-Y182A-R190L-S205G-F207T-S212D-F226L-A236P-Y239I-L249P-S252I-E254Q-L258F, R40T-T64V-S70E-T117L-T177N-I178L-F180P-Y182A-R190L-S205G-F207T-V210I-S212D-F226L-A236P-Y239I-L249P-S252I-E254Q-L258F, R40T-T64V-S70E-T117L-T177N-I178L-F180P-Y182A-R190L-S205G-F207T-S212D-F226L-A236P-Y239I-S244E-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-R256K-L258F, V14S-R40A-G59Y-G61D-T64V-A66D-S70E-T117L-Q161H-T177R-I178L-F180P-Y182A-R190L-S205G-F207T-V210I-S212D-F226L-A236P-Y239I-L249P-S252I-E254Q-R256K-L258F, V14S-R40A-G59Y-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, R40T-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, and V14S-R40A-G59Y-G61D-T64V-A66D-S70E-T117L-Q161H-G175A-T177R-I178L-F180P-Y182A-R190L-S205G-F207T-V210I-S212D-F226L-A236P-Y239I-L249P-S252I-E254Q-R256K-L258F, where the positions are numbered by reference to the amino acid sequence of SEQ ID NO:1, and having polyesterase activity.

In various embodiments, the polyesterase used in cleaning compositions according to the invention comprises an amino acid sequence having at least 85% and increasingly preferably 86%, 87%, 88%, 89%, 90%, 91%, 92%, 93% or 94% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.

In various embodiments, the polyesterase used in cleaning compositions according to the invention comprises an amino acid sequence having at least 85% and increasingly preferably 86%, 87%, 88%, 89%, 90%, 91%, 92%, 93% or 94% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.

In various embodiments, the polyesterase used in cleaning compositions according to the invention comprises an amino acid sequence having at least 85% and increasingly preferably 86%, 87%, 88%, 89%, 90%, 91%, 92%, 93% or 94% identity to the full length amino acid sequence of SEQ ID NO:1, comprising the substitutions T64V-T117L-T177R-1178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.

In various embodiments, the polyesterase used in cleaning compositions according to the invention comprises an amino acid sequence having at least 85% and increasingly preferably 86%, 87%, 88%, 89%, 90%, 91%, 92%, 93% or 94% identity to the full length amino acid sequence of SEQ ID NO:1 and comprises a combination of mutations selected from the group consisting of R40T-T64V-T117L-G175E-T177N-F180P-Y182A-R190L-S205G-F207L-S212D-F226L-Y239I-L249P-S252I-L258F, R40T-G61D-T64V-S70E-T117L-T177N-I178L-F180P-Y182A-R190L-S205G-F207T-S212D-F226L-Q227H-A236P-Y239I-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-L258F, R40A-T64V-S70E-T117L-T177N-I178L-F180P-Y182A-R190L-S205G-F207T-S212D-F226L-A236P-Y239I-L249P-S252I-E254Q-L258F, R40T-T64V-S70E-T117L-Q161H-T177N-1178L-F180P-Y182A-R190L-S205G-F207T-S212D-F226L-A236P-Y239I-L249P-S252I-E254Q-L258F, R40T-T64V-S70E-T117L-G175A-T177N-I178L-F180P-Y182A-R190L-S205G-F207T-S212D-F226L-A236P-Y239I-L249P-S252I-E254Q-L258F, R40T-T64V-S70E-T117L-T177N-I178L-F180P-Y182A-R190L-S205G-F207T-V210I-S212D-F226L-A236P-Y239I-L249P-S252I-E254Q-L258F, R40T-T64V-S70E-T117L-T177N-I178L-F180P-Y182A-R190L-S205G-F207T-S212D-F226L-A236P-Y239I-S244E-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-R256K-L258F, V14S-R40A-G59Y-G61D-T64V-A66D-S70E-T117L-Q161H-T177R-I178L-F180P-Y182A-R190L-S205G-F207T-V210I-S212D-F226L-A236P-Y239I-L249P-S252I-E254Q-R256K-L258F, V14S-R40A-G59Y-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, R40T-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, and V14S-R40A-G59Y-G61D-T64V-A66D-S70E-T117L-Q161H-G175A-T177R-I178L-F180P-Y182A-R190L-S205G-F207T-V210I-S212D-F226L-A236P-Y239I-L249P-S252I-E254Q-R256K-L258F, where the positions are numbered by reference to the amino acid sequence of SEQ ID NO:1, and having polyesterase activity.

In various embodiments, the polyesterase used in cleaning compositions according to the invention comprises an amino acid sequence having at least 90% and increasingly preferably 91%, 92%, 93% or 94% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.

In various embodiments, the polyesterase used in cleaning compositions according to the invention comprises an amino acid sequence having at least 90% and increasingly preferably 91%, 92%, 93% or 94% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.

In various embodiments, the polyesterase used in cleaning compositions according to the invention comprises an amino acid sequence having at least 90% and increasingly preferably 91%, 92%, 93% or 94% identity to the full length amino acid sequence of SEQ ID NO:1, comprising the substitutions T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.

In various embodiments, the polyesterase used in cleaning compositions according to the invention comprises an amino acid sequence having at least 90% and increasingly preferably 86%, 87%, 88%, 89%, 90%, 91%, 92%, 93% or 94% identity to the full length amino acid sequence of SEQ ID NO:1 and comprises a combination of mutations selected from the group consisting of R40T-T64V-T117L-G175E-T177N-F180P-Y182A-R190L-S205G-F207L-S212D-F226L-Y239I-L249P-S252I-L258F, R40T-G61D-T64V-S70E-T117L-T177N-I178L-F180P-Y182A-R190L-S205G-F207T-S212D-F226L-Q227H-A236P-Y239I-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-L258F, R40A-T64V-S70E-T117L-T177N-I178L-F180P-Y182A-R190L-S205G-F207T-S212D-F226L-A236P-Y239I-L249P-S252I-E254Q-L258F, R40T-T64V-S70E-T117L-Q161H-T177N-I178L-F180P-Y182A-R190L-S205G-F207T-S212D-F226L-A236P-Y239I-L249P-S252I-E254Q-L258F, R40T-T64V-S70E-T117L-G175A-T177N-I178L-F180P-Y182A-R190L-S205G-F207T-S212D-F226L-A236P-Y239I-L249P-S252I-E254Q-L258F, R40T-T64V-S70E-T117L-T177N-I178L-F180P-Y182A-R190L-S205G-F207T-V210I-S212D-F226L-A236P-Y239I-L249P-S252I-E254Q-L258F, R40T-T64V-S70E-T117L-T177N-I178L-F180P-Y182A-R190L-S205G-F207T-S212D-F226L-A236P-Y239I-S244E-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-R256K-L258F, V14S-R40A-G59Y-G61D-T64V-A66D-S70E-T117L-Q161H-T177R-I178L-F180P-Y182A-R190L-S205G-F207T-V210I-S212D-F226L-A236P-Y239I-L249P-S252I-E254Q-R256K-L258F, V14S-R40A-G59Y-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, R40T-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, and V14S-R40A-G59Y-G61D-T64V-A66D-S70E-T117L-Q161H-G175A-T177R-I178L-F180P-Y182A-R190L-S205G-F207T-V210I-S212D-F226L-A236P-Y239I-L249P-S252I-E254Q-R256K-L258F, where the positions are numbered by reference to the amino acid sequence of SEQ ID NO:1, and having polyesterase activity.

In various embodiments, the polyesterase used in cleaning compositions according to the invention comprises an amino acid sequence having a combination of mutations selected from the group consisting of R40T-T64V-T117L-G175E-T177N-F180P-Y182A-R190L-S205G-F207L-S212D-F226L-Y239I-L249P-S252I-L258F, R40T-G61D-T64V-S70E-T117L-T177N-I178L-F180P-Y182A-R190L-S205G-F207T-S212D-F226L-Q227H-A236P-Y239I-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-L258F, R40A-T64V-S70E-T117L-T177N-I178L-F180P-Y182A-R190L-S205G-F207T-S212D-F226L-A236P-Y239I-L249P-S252I-E254Q-L258F, R40T-T64V-S70E-T117L-Q161H-T177N-I178L-F180P-Y182A-R190L-S205G-F207T-S212D-F226L-A236P-Y239I-L249P-S252I-E254Q-L258F, R40T-T64V-S70E-T117L-G175A-T177N-I178L-F180P-Y182A-R190L-S205G-F207T-S212D-F226L-A236P-Y239I-L249P-S252I-E254Q-L258F, R40T-T64V-S70E-T117L-T177N-I178L-F180P-Y182A-R190L-S205G-F207T-V210I-S212D-F226L-A236P-Y239I-L249P-S252I-E254Q-L258F, R40T-T64V-S70E-T117L-T177N-I178L-F180P-Y182A-R190L-S205G-F207T-S212D-F226L-A236P-Y239I-S244E-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-R256K-L258F, V14S-R40A-G59Y-G61D-T64V-A66D-S70E-T117L-Q161H-T177R-I178L-F180P-Y182A-R190L-S205G-F207T-V210I-S212D-F226L-A236P-Y239I-L249P-S252I-E254Q-R256K-L258F, V14S-R40A-G59Y-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, R40T-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, and V14S-R40A-G59Y-G61D-T64V-A66D-S70E-T117L-Q161H-G175A-T177R-I178L-F180P-Y182A-R190L-S205G-F207T-V210I-S212D-F226L-A236P-Y239I-L249P-S252I-E254Q-R256K-L258F, where the positions are numbered by reference to the amino acid sequence of SEQ ID NO:1 and where the sequence besides said combination of mutations is identical to SEQ ID NO:1, and having polyesterase activity.

In various embodiments, the polyesterase used in cleaning compositions according to the invention has polyesterase activity (e.g., ability to catalyze the hydrolysis and/or surface modification) on at least one polyester selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof. In various embodiments, the polyesterases provided herein have esterase activity on PET. In various embodiments, polyesters may be partially or substantially biodegradable. In various embodiments, the polyesters may be partially or substantially resistant to microbial and enzymatic attack. In various embodiments, a polyester may be an aliphatic polyester. In various embodiments, a polyester may be an aromatic polyester. In various embodiments, an aromatic polyester may be a polyethylene terephthalate (PET). In various embodiments, an aromatic polyester may be a polytrimethylene terephthalate (PTT).

In various embodiments, the polyesterase used in cleaning compositions according to the invention is characterized in that its anti-pilling or de-pilling performance is not significantly reduced compared to that of a polyesterase which comprises an amino acid sequence that corresponds to (or consists of) the amino acid sequence given in SEQ ID NO:1, i.e., has at least 70%, 75%, 80%, 85%, 90%, 95% of the reference anti-/de-pilling performance. This relates in particular to variants which have the sequence identities or homologies given above.

In various embodiments, the polyesterase used in cleaning compositions according to the invention is characterized in that its anti-graying performance is not significantly reduced compared to that of a polyesterase which comprises an amino acid sequence that corresponds to (or consists of) the amino acid sequence given in SEQ ID NO:1, i.e., has at least 70%, 75%, 80%, 85%, 90%, 95% of the reference anti-graying performance. This relates in particular to variants which have the sequence identities or homologies given above.

In various embodiments, the polyesterase used in cleaning compositions according to the invention is characterized in that its anti-pilling and/or de-pilling and/or anti-graying performance is not significantly reduced compared to that of a polyesterase which comprises an amino acid sequence that corresponds to (or consists of) the amino acid sequence given in SEQ ID NO:1, i.e., has at least 70%, 75%, 80%, 85%, 90%, 95% of the reference anti-pilling performance and/or de-pilling performance and/or of reference anti-graying performance. This relates in particular to variants which have the sequence identities or homologies given above.

The anti-pilling performance and/or de-pilling performance and/or anti-graying performance can be determined in a washing system which comprises a washing agent in a dosage of between 4.5 and 7.0 g/L of washing liquor and the polyesterase, the polyesterases to be compared being used in the same concentration (based on active protein) and the anti-pilling and/or de-pilling and/or anti-graying performance being determined as described herein. For example, the washing operation can take place for 60 min at 40°C and the water can have a water hardness between 15.5 and 16.5°dH (German hardness). The concentration of the polyesterase in the washing agent intended for this washing system is from 0.00001 to 1 wt.%, preferably from 0.0001 to 0.5 wt.%, particularly preferably from 0.001 to 0.1 wt.%, based on active protein.

A preferred liquid washing agent for such a washing system may be composed as follows (in wt.%): 3-7% alkyl benzene sulfonic acid, 2-6% anionic surfactants, 0.5-3% C₁₂₋₁₈ Na salts of fatty acids, 3-7% non-ionic surfactants, 0.1-2% phosphonates, 0.1-2% citric acid, 0.3-1% NaOH, 0.3-2% glycerol, 0.05-0.1% preservatives, 0.5-2% enzyme mix (e.g., protease, amylase, mannanase), minors (antifoam, ethanol, dye, perfume), and the remainder being demineralized water. Preferably, the dosage of the liquid washing agent is between 4.5 and 6.0 g/L of washing liquor, e.g., 4.7, 4.9 or 5.9 g/L of washing liquor. Washing preferably takes place in a pH range between pH 5.5 to 10, preferably pH 5.0 to 9.0, more preferably pH 5.5 to 9.0, even more preferably pH 5.5 to 8.5, as measured in 1 wt.% aqueous solution at 20°C.

Another preferred liquid washing agent for such a washing system may be composed as follows (in wt.%): 5-30% anionic surfactants, 0-5% amphoteric surfactants, 1-15% non-ionic surfactants, 0-4% citric acid/citrate, 0-5% performance polymers, 1-20% solvents in particular organic solvents, such as propane diol or ethanol, 0-1.5% boric acid, 0.0001-1% enzyme mix (e.g., protease, amylase, mannanase), 0.2-2% complex builders, minors (anti-foam, optical brightener, antifoam, dye, perfume), and the remainder being demineralized water. Preferably, the dosage of the liquid washing agent is between 4.5 and 6.0 g/L of washing liquor, e.g., 4.7, 4.9 or 5.9 g/L of washing liquor. Washing preferably takes place in a pH range between pH 5.5 to 10, preferably pH 5.0 to 9.0, more preferably pH 5.5 to 9.0, even more preferably pH 5.5 to 8.5, as measured in 1 wt.% aqueous solution at 20°C.

Another preferred liquid washing agent for such a washing system is composed as follows (in wt.%): 2-6% anionic surfactants, 0.5-3% C₁₂₋₁₈ Na salts of fatty acids, 3-7% non-ionic surfactants, 0.1-2% phosphonates, 0.1-2% citric acid, 0.3-1% NaOH, 0.3-2% glycerol, 0.05-0.1% preservatives, 0.5-2% enzyme mix (e.g., protease, amylase, mannanase), minors (anti-foam, ethanol, dye, perfume), and the remainder being demineralized water. Preferably, the dosage of the liquid washing agent is between 4.5 and 6.0 g/L of washing liquor, e.g., 4.7, 4.9 or 5.9 g/L of washing liquor. Washing preferably takes place in a pH range between pH 5.5 to 10, preferably pH 5.0 to 9.0, more preferably pH 5.5 to 9.0, even more preferably pH 5.5 to 8.5, as measured in 1 wt.% aqueous solution at 20°C.

Another preferred liquid washing agent for such a washing system is composed as follows (in wt.%): 4.4% alkyl benzene sulfonic acid, 5.6% anionic surfactants, 2.4% C₁₂-C₁₈ Na salts of fatty acids, 4.4% non-ionic surfactants, 0.2% phosphonates, 1.4% citric acid, 0.95% NaOH, 0.01% defoamer, 2% glycerol, 0.08% preservatives, 1% ethanol, 1.6% enzyme mix (e.g., protease, amylase, mannanase) and the remainder being demineralized water. Preferably, the dosage of the liquid washing agent is between 4.5 and 6.0 g/L of washing liquor, e.g., 4.7, 4.9 or 5.9 g/L of washing liquor. Washing preferably takes place in a pH range between pH 5.5 to 10, preferably pH 5.0 to 9.0, more preferably pH 5.5 to 9.0, even more preferably pH 5.5 to 8.5, as measured in 1 wt.% aqueous solution at 20°C.

In the context of the invention, the anti-pilling and/or de-pilling and/or anti-graying performance is determined at 40°C using a liquid washing agent as indicated above or in one as described in example 1, the washing operation preferably taking place for 60 min.

The anti-pilling and/or de-pilling performance can be tracked using visual evaluation. In this case, a group of testers assigns the laundry to be examined a value on a scale of 1 to 5. The value = 1 stands for very heavily pilled laundry, while the value = 5 is assigned to un-pilled laundry.

The anti-graying performance can be tracked by measuring the Tristimulus-value (Y without UV) of the soiled fabric before and after wash with a spectrophotometer (Spectraflash SF600: without UV, Filter 420 nm, without brilliance). The higher the Y value, the higher is the re-whitening of pre-grayed textiles.

Measurement of color vibrancy can be tracked by measuring the GSc-value (grey scale rating) of unwashed and washed textiles with a spectrophotometer (Spectraflash SF600 / UV calibration; 5 = best value, 1 = worst value).

The activity-equivalent use of the relevant enzyme ensures that the respective enzymatic properties, e.g., the de-pilling performance and/or anti-pilling performance and/or anti-graying performance, are likened even if the ratio of active substance to total protein (the values of the specific activity) diverges. In general, a low specific activity can be compensated for by adding a larger amount of protein.

In various embodiments, the invention provides methods for treating a fabric or a textile comprising contacting a fabric or a textile with a polyesterase, as described herein, or a composition comprising such polyesterase, and optionally rinsing the fabric or textile.

In various embodiments, the contacting steps of the methods according to the invention comprise a polyesterase in an amount selected from the group consisting of 0.002 to 10000 mg of protein, 0.005 to 5000 mg of protein, 0.01 to 5000 mg of protein, 0.05 to 5000 mg of protein, 0.05 to 1300 mg of protein, 0.1 to 1300 mg of protein, 0.1 to 500 mg of protein, 0.1 to 100 mg of protein, per liter of wash liquor.

In various embodiments, the cleaning composition comprises at least one cellulase, preferably in an amount of 0.00001 to 1 wt.%, more preferably 0.0001 to 0.5 wt.%, particularly preferably 0.001 to 0.1 wt.%, based on active protein and based on total weight of the cleaning composition.

The term "cellulase", as used herein, refers to an enzyme that catalyzes the hydrolysis of 1,4-β-D-glycosidic bonds in cellulose (cellobiose), and/or lichenin and/or β-D-glucans. They are often also capable of hydrolyzing the 1,4-bonds in β-D-glucans that in addition to 1,4-bonds also possess 1,3-bonds. Cellulases are capable of decomposing cellulose to β-glucose. Consequently, cellulases act in particular on cellulose-containing or cellulose derivative-containing residues and catalyze their hydrolysis. In a preferred embodiment of the invention, the cellulase is an endoglucanase (EC 3.2.1.4). Synonymous expressions can be used for cellulases, in particular endoglucanase, endo-1,4-β-glucanase, carboxy methyl cellulase, endo-1,4-β-D-glucanase, β-1,4-glucanase, β-1,4-endoglucanhydrolase, celludextrinase or avicelase. The determining factor of whether an enzyme is a cellulase in the context of the invention, is its ability to hydrolyze 1,4-β-D-glycosidic bonds in cellulose.

The term "cellulase activity" is defined herein as an enzyme catalyzing hydrolysis of 1,4-β-D-glycosidic linkages in β-1,4-glucan (cellulose). The cellulose activity is measured using a standard method, e.g., as follows: Cellulases release glucose from CMC (carboxy methyl cellulose). Samples are incubated under defined reaction conditions (100 mM sodium phosphate buffer pH 7.5, 40°C, 15 min) with a substrate (1.25% CMC). The reaction with p-hydroxybenzoic acid hydrazide (PAHBAH) in the presence of bismuth affords a yellow dye that can be determined photometrically at 410 nm. A condition is an alkaline pH during the color reaction. The quantity of released sugar corresponding to the coloration is a measure of the enzyme activity (Lever, Anal. Biochem., 1972, 47 & 1977, 81).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g., the fungal cellulases produced from *Humicola insolens, Myceliophthora thermophila* and *Fusarium oxysporum* disclosed in US 4435307, US 5648263, US 5691178, US 5776757 and WO 89/09259. Especially suitable cellulases are the alkaline or neutral cellulases having color care benefits. Examples of such cellulases are cellulases described in EP 0495257, EP 0531372, WO 96/11262, WO 96/29397, WO 98/08940. Other examples are cellulase variants such as those described in WO 94/07998, EP 0531315, US 5457046, US 5686593, US 5763254, WO 95/24471, WO 98/12307 and WO 99/01544.

Examples of cellulases exhibiting endo-β-1,4-glucanase activity (EC 3.2.1.4) are described in WO 2002/099091, e.g., those having a sequence of at least 97% identity to the amino acid sequence of positions 1 to 773 of SEQ ID NO:2 of WO 2002/099091. Further example may include a GH44 xyloglucanase, e.g., a xyloglucanase enzyme having a sequence of at least 60% identity to positions 40 to 559 of SEQ ID NO:2 of WO 2001/062903.

Commercially available cellulases include Celluzyme^{™}, Carezyme^{™}, Carezyme Premium^{™}, Celluclean^{™}, Celluclean Classic^{™}, Cellusoft^{™}, Endolase^{®}, Renozyme^{®} and Whitezyme^{™} (Novozymes A/S), Clazinase^{™} and Puradax HA^{™} (Genencor International Inc.), KAC-500(B)^{™} (Kao Corporation), Revitalenz^{™} 1000, Revitalenz^{™} 2000 and Revitalenz^{™} 3000 (DuPont), and Ecostone^{®} and Biotouch^{®} series (AB Enzymes).

The polyesterase provided herein may be used in the production of various compositions, such as cleaning or detergent compositions. Thus, in various embodiments, the present disclosure provides cleaning or detergent compositions comprising the polyesterase provided herein.

The present invention is directed to cleaning compositions (e.g., detergent compositions or laundry detergent compositions) comprising at least one polyesterase, as described herein, at least one surfactant and a builder system, optionally further comprising at least one cellulase, sodium benzoate, at least one further enzyme and at least one performance polymer. The compositions generally comprise at least one polyesterase, as described herein, at least one surfactant and a builder system, optionally further comprising at least one cellulase, sodium benzoate, at least one further enzyme and at least one performance polymer, and further comprising one or more additional detergent components, such as those described herein.

In various embodiments, the cleaning composition comprises at least one polyesterase at a concentration of in use of 0.001 to 10000 mg/L, or 0.001 to 2000 mg/L, or 0.01 to 5000 mg/L, or 0.01 to 2000 mg/L, or 0.01 to 1300 mg/L, or 0.1 to 5000 mg/L, or 0.1 to 2000 mg/L, or 0.1 to 1300 mg/L, or 1 to 5000 mg/L, or 1 to 1300 mg/L, or 1 to 500 mg/L, or 10 to 5000 mg/L, or 10 to 1300 mg/L, or 10 to 500 mg/L. In various embodiments, the cleaning composition comprises at least one polyesterase in an amount of 0.002 to 5000 mg of protein, such as 0.005 to 1300 mg of protein, or 0.01 to 5000 mg of protein, or 0.01 to 1300 mg of protein, or 0.1 to 5000 mg of protein, or 1 to 1300 mg of protein, preferably 0.1 to 1300 mg of protein, more preferably 1 to 1300 mg of protein, even more preferably 10 to 500 mg of protein, per liter of wash liquor, or in the amount of at least 0.01 ppm active enzyme.

In various embodiments, the cleaning composition comprises at least one cellulase at a concentration of in use of 0.001 to 10000 mg/L, or 0.001 to 2000 mg/L, or 0.01 to 5000 mg/L, or 0.01 to 2000 mg/L, or 0.01 to 1300 mg/L, or 0.1 to 5000 mg/L, or 0.1 to 2000 mg/L, or 0.1 to 1300 mg/L, or 1 to 5000 mg/L, or 1 to 1300 mg/L, or 1 to 500 mg/L, or 10 to 5000 mg/L, or 10 to 1300 mg/L, or 10 to 500 mg/L. In various embodiments, the cleaning composition comprises at least one cellulase in an amount of 0.002 to 5000 mg of protein, such as 0.005 to 1300 mg of protein, or 0.01 to 5000 mg of protein, or 0.01 to 1300 mg of protein, or 0.1 to 5000 mg of protein, or 1 to 1300 mg of protein, preferably 0.1 to 1300 mg of protein, more preferably 1 to 1300 mg of protein, even more preferably 10 to 500 mg of protein, per liter of wash liquor, or in the amount of at least 0.01 ppm active enzyme.

In various embodiments, the cleaning composition comprises at last one polyesterase in an amount of 0.00001 to 1 wt.%, more preferably 0.0001 to 0.5 wt.%, particularly preferably 0.001 to 0.1 wt.%, based on active protein and based on total weight of the composition.

In various embodiments, the cleaning composition comprises at last one cellulase in an amount of 0.00001 to 1 wt.%, more preferably 0.0001 to 0.5 wt.%, particularly preferably 0.001 to 0.1 wt.%, based on active protein and based on total weight of the composition.

In various embodiments, the cleaning composition comprises at last one surfactant in an amount of 3 to 35 wt.%, more preferably 5 to 30 wt.%, based on total weight of the composition.

In various embodiments, the cleaning composition comprises a builder system in an amount of 0.5 to 50 wt.%, more preferably 0.5 to 20 wt.%, particularly preferably 0.5 to 10 wt.%, based on total weight of the composition.

In various embodiments, the cleaning composition comprises sodium benzoate in an amount of 0.01 to 1 wt.%, more preferably 0.05 to 0.5 wt.%, based on total weight of the composition.

In various embodiments, the cleaning composition comprises at last one further enzyme in an amount of 0.01 to 10 wt.%, more preferably 0.1 to 8 wt.%, particularly preferably in an amount of 0.2 to 6 wt.%, based on active protein and based on total weight of the composition.

In various embodiments, the cleaning composition comprises at least one performance polymer, preferably in an amount of 0.1 to 1.0 wt.%, more preferably 0.15 to 0.8 wt.%, particularly preferably 0.3 to 0.6 wt.%, based on total weight of the cleaning composition,

In various embodiments, the cleaning composition comprises at least one additional detergent component, said additional detergent component being selected from the group consisting of surfactants, builders, flocculating aid, chelating agents, dye transfer inhibitors, enzymes, enzyme stabilizers, enzyme inhibitors, catalytic materials, bleaching agents, bleach activators, bleach catalysts, hydrogen peroxide, sources of hydrogen peroxide, preformed peracids, polymeric dispersing agents, clay soil removal/anti-redeposition agents, brighteners, suds suppressors, dyes, perfumes, structure elasticizing agents, fabric softeners, carriers, hydrotropes, builders and co-builders, fabric hueing agents, anti-foaming agents, dispersants, processing aids, pH control agents, alkalinity sources, solubilizing agents photoactivators, fluorescers, fabric conditioners, hydrolysable surfactants, preservatives, anti-oxidants, anti-shrinkage agents, anti-wrinkle agents, germicides, fungicides, color speckles, anti-corrosion agents, silver care, anti-tarnish, filler salts, colorants, soil release polymers and/or pigments. In various embodiments, the at least one additional ingredient is selected from surfactants, builders, preserving agents, further enzymes and performance polymers or combinations thereof.

In particular, a combination of a cleaning composition according to the invention with one or more further ingredients of the composition is advantageous, since, in preferred embodiments according to the invention, such a cleaning composition has improved cleaning performance by virtue of resulting synergisms. In particular, combining a cleaning composition according to the invention with a surfactant and/or a builder and/or a peroxygen compound and/or a bleach activator can result in such a synergism.

In various embodiments, the cleaning composition comprises sodium benzoate instead of conventional preserving agents (like e.g. MIT, BIT), preferably in an amount of 0.01 to 1 wt.%, more preferably 0.05 to 0.5 wt.%.

In various embodiments, the cleaning composition comprises sodium benzoate in an amount of 0.01 to 1 wt.%, more preferably 0.05 to 0.5 wt.% and has a pH of 5.0 to 10.0, preferably 5.0 to 9.0, even more preferably 5.5 to 8.5, as measured in 1 wt.% aqueous solution at 20°C.

In various embodiments, the cleaning composition comprises sodium benzoate in an amount of 0.01 to 1 wt.%, more preferably 0.05 to 0.5 wt.% and has a pH 5.5 to 8.5, as measured in 1 wt.% aqueous solution at 20°C.

Advantageous ingredients of cleaning compositions according to the invention are disclosed in international patent application WO 2009/121725, starting at the penultimate paragraph of page 5 and ending after the second paragraph on page 13. Reference is expressly made to this disclosure and the disclosure therein is incorporated in the present patent application by reference.

Enzyme component weights are based on total active protein. All percentages and ratios are calculated by weight unless otherwise indicated. All percentages and ratios are calculated based on the total composition unless otherwise indicated. In laundry detergent compositions, the enzyme levels are expressed in ppm, which equals mg active protein/kg detergent composition.

The cleaning compositions according to the invention might comprise at least one compound from the class of surfactants, in particular selected from anionic, non-ionic, cationic, zwitterionic or amphoteric surfactants, or any mixture thereof. In various embodiments, the compositions comprise 0.1 to 60 wt.%, or 1 to 50 wt.%, or 5 to 40 wt.% surfactant relative to the total weight of the composition, preferably 2 to 30 wt.%, particular preferably 4 to 20 wt.%. Preferred compositions comprise 3 to 35 wt.%, more preferably 5 to 30 wt.%, surfactants.

When included therein, the cleaning composition according to the invention will usually comprise 1 to 40 wt.% anionic surfactant, e.g., 5 to 30 wt.%, in particular 5 to 15 wt.%, or 15 to 20 wt.%, or 20 to 25 wt.%, preferably 2 to 6 wt.%, more preferably 3 to 5 wt.%.

Suitable surfactants are, e.g., anionic surfactants of the formula (I)

R-SO₃⁻Y⁺ (I),

in which R represents a linear or branched, unsubstituted alkyl aryl functional group, and Y⁺ represents a monovalent cation or the n^{th} part of an n-valent cation, the alkali metal ions, including Na⁺ or K⁺, being preferred in this case, with Na⁺ being most preferred. Further cations Y⁺ can be selected from NH₄⁺, ½Zn²⁺, ½Mg²⁺, ½Ca²⁺, ½Mn²⁺, and mixtures thereof.

"Alkyl aryl", as used herein, refers to organic functional groups that consist of an alkyl functional group and an aromatic functional group. Typical examples of functional groups of this kind include, but are not limited to, alkyl benzene functional groups, such as benzyl, butyl benzene functional groups, nonyl benzene functional groups, decyl benzene functional groups, undecyl benzene functional groups, dodecyl benzene functional groups, tridecyl benzene functional groups and the like.

Such surfactants might be selected from linear or branched alkyl benzene sulfonates of the formula (A-1): 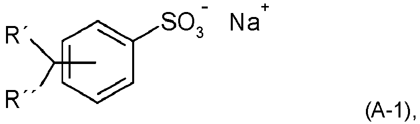 in which R' and R" together comprise 9 to 19, preferably 11 to 15, in particular 11 to 13, C atoms.

A very particularly preferred surfactant can be described by formula (A-1a):

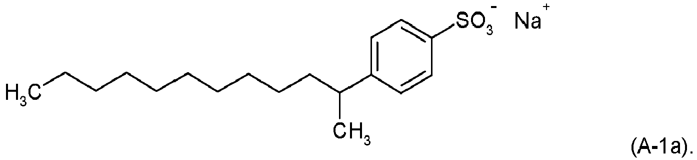

In various embodiments, the compound of the formula (I) is preferably the sodium salt of a linear alkyl benzene sulfonate.

In various embodiments, the cleaning compositions according to the invention might comprise at least one anionic surfactant of the formula (II):

R¹-O-(AO)ₙ-SO₃⁻X⁺ (II),

in which R¹ represents a linear or branched, substituted or unsubstituted alkyl, aryl or alkyl aryl functional group, preferably a linear, unsubstituted alkyl functional group, particularly preferably a fatty alcohol functional group. Preferred functional groups R¹ are selected from decyl, undecyl, dodecyl, tridecyl, tetradecyl, pentadecyl, hexadecyl, heptadecyl, octadecyl, nonadecyl, eicosyl functional groups and mixtures thereof, the representatives having an even number of C atoms being preferred. Particularly preferred functional groups R¹ are derived from C₁₂₋₁₈ fatty alcohols, e.g., from coconut fatty alcohol, tallow fatty alcohol, lauryl, myristyl, cetyl or stearyl alcohol or from C₁₀₋₂₀ oxo alcohols. AO represents an ethylene oxide (EO) group or propylene oxide (PO) group, preferably an ethylene oxide group. The index n represents an integer of from 1 to 50, preferably from 1 to 20, and in particular from 2 to 10. Very particularly preferably, n represents the numbers 2, 3, 4, 5, 6, 7 or 8. X⁺ represents a monovalent cation or the n^{th} part of an n-valent cation, in this case the alkali metal ions, which include Na⁺ or K⁺, being preferred, Na⁺ being most preferred. Further cations X⁺ can be selected from NH₄⁺, ½Zn²⁺, ½Mg²⁺, ½Ca²⁺, ½Mn²⁺, and mixtures thereof.

Cleaning compositions according to the invention might comprise at least one anionic surfactant selected from fatty alcohol ether sulfates of the formula (A 2): 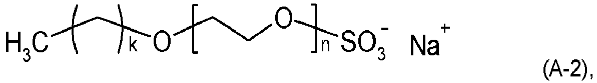 where k = 11 to 19, and n = 2, 3, 4, 5, 6, 7 or 8. Particularly preferred representatives are Na-C₁₂₋₁₄ fatty alcohol ether sulfates having 2 EO (k = 11 to 13, n = 2 in formula (A-2)).

Other anionic surfactants that can be used are the alkyl sulfates of the formula (III):

R²-O-SO₃⁻X⁺ (III).

In this formula (III), R² represents a linear or branched, substituted or unsubstituted alkyl functional group, preferably a linear, unsubstituted alkyl functional group, particularly preferably a fatty alcohol functional group. Preferred functional groups R² are selected from decyl, undecyl, dodecyl, tridecyl, tetradecyl, pentadecyl, hexadecyl, heptadecyl, octadecyl, nonadecyl, eicosyl functional groups and mixtures thereof, the representatives having an even number of C atoms being preferred. Particularly preferred functional groups R² are derived from C₁₂₋₁₈ fatty alcohols, e.g., from coconut fatty alcohol, tallow fatty alcohol, lauryl, myristyl, cetyl or stearyl alcohol or from C₁₀₋₂₀ oxo alcohols. X⁺ represents a monovalent cation or the n^{th} part of an n-valent cation, in this case the alkali metal ions, which include Na⁺ or K⁺, being preferred, Na⁺ being most preferred. Further cations X⁺ can be selected from NH₄⁺, ½Zn²⁺, ½Mg²⁺, ½Ca²⁺, ½Mn²⁺, and mixtures thereof.

Further surfactants might be selected from fatty alcohol sulfates of the formula (A-3): 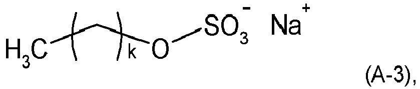 where k = 11 to 19. Very particularly preferred representatives are Na-C₁₂₋₁₄ fatty alcohol sulfates (k = 11 to 13 in formula (A-3)).

In various embodiments, the cleaning composition according to the invention might comprise, in addition to the anionic surfactants described above, in particular those of the formulas (I) to (III), or alternatively at least one other surfactant. Other alternative or additional surfactants are, in particular, further anionic surfactants, non-ionic surfactants and mixtures thereof, but also cationic, zwitterionic and amphoteric surfactants.

Anionic surfactants include, but are not limited to, linear alkyl benzene sulfonates (LAS), isomers of LAS, branched alkyl benzene sulfonates (BABS), phenyl alkane sulfonates, α-olefin sulfonates (AOS), olefin sulfonates, alkene sulfonates, alkane-2,3-diylbis(sulfates), hydroxy alkane sulfonates and disulfonates, alkyl sulfates (AS) such as sodium dodecyl sulfate (SDS), fatty alcohol sulfates (FAS), primary alcohol sulfates (PAS), alcohol ether sulfates (AES or AEOS or FES, also known as alcohol ethoxy sulfates or fatty alcohol ether sulfates), secondary alkane sulfonates (SAS), paraffin sulfonates (PS), ester sulfonates, sulfonated fatty acid glycerol esters, α-sulfo fatty acid methyl esters (α-SFMe or SES) including methyl ester sulfonate (MES), alkyl- or alkenyl succinic acid, dodecenyl/tetradecenyl succinic acid (DTSA), fatty acid derivatives of amino acids, diesters and monoesters of sulfo succinic acid or salt of fatty acids (soap), and combinations thereof.

When included therein, the cleaning composition according to the invention will usually comprise 0.2 to 40 wt.% non-ionic surfactant, e.g., 0.5 to 30 wt.%, in particular 1 to 20 wt.%, 3 to 10 wt.%, or 3 to 5 wt.%, 8 to 12 wt.%, or 10 to 12 wt.%.

In various embodiments, the cleaning composition comprises at least one non-ionic surfactant, in particular at least one fatty alcohol alkoxylate.

Suitable non-ionic surfactants are those of the formula (IV):

R³-O-(AO)ₘ-H (IV),

in which R³ represents a linear or branched, substituted or unsubstituted alkyl functional group, preferably a linear, unsubstituted alkyl functional group, particularly preferably a fatty alcohol functional group. Preferred functional groups R³ are selected from decyl, undecyl, dodecyl, tridecyl, tetradecyl, pentadecyl, hexadecyl, heptadecyl, octadecyl, nonadecyl, eicosyl functional groups and mixtures thereof, the representatives having an even number of C atoms being preferred. Particularly preferred functional groups R³ are derived from C₁₂₋₁₈ fatty alcohols, e.g., from coconut fatty alcohol, tallow fatty alcohol, lauryl, myristyl, cetyl or stearyl alcohol or from C₁₀₋₂₀ oxo alcohols. AO represents an ethylene oxide (EO) group or propylene oxide (PO) group, preferably an ethylene oxide group. The index m represents an integer from 1 to 50, preferably from 1 to 20, and in particular from 2 to 10. Very particularly preferably, m represents the numbers 2, 3, 4, 5, 6, 7 or 8.

The fatty alcohol alkoxylates might be compounds of the formula (V): 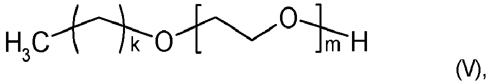 where k = 11 to 19, and m = 2, 3, 4, 5, 6, 7 or 8. Very particularly preferred representatives are C₁₂₋₁₈ fatty alcohols having 7 EO (k = 11 to 17, m = 7 in formula (V)).

Further non-ionic surfactants which might be comprised in the compositions according to the invention include, but are not limited to, alkyl glycosides, alkoxylated alkyl fatty acid esters, amine oxides, fatty acid alkanol amides, hydroxy mixed ethers, sorbitan fatty acid esters, polyhydroxy fatty acid amides and alkoxylated alcohols.

Examples of non-ionic surfactants include, but are not limited to, alcohol ethoxylates (AE or AEO), alcohol propoxylates, propoxylated fatty alcohols (PFA), alkoxylated fatty acid alkyl esters, such as ethoxylated and/or propoxylated fatty acid alkyl esters, alkyl phenol ethoxylates (APE), nonyl phenol ethoxylates (NPE), alkyl polyglycosides (APG), alkoxylated amines, fatty acid monoethanol amides (FAM), fatty acid diethanol amides (FADA), ethoxylated fatty acid monoethanol amides (EFAM), propoxylated fatty acid monoethanol amides (PFAM), polyhydroxy alkyl fatty acid amides, or N-acyl N-alkyl derivatives of glucosamine (glucamides, GA, or fatty acid glucamides, FAGA), as well as products available under the trade names SPAN and TWEEN, and combinations thereof. Commercially available non-ionic surfactants include Plurafac^{™}, Lutensol^{™} and Pluronic^{™} range from BASF, Dehypon^{™} series from Cognis and Genapol^{™} series from Clariant.

When included therein, the cleaning composition according to the invention will usually comprise 1 to 40 wt.% cationic surfactant, e.g., 0.5 to 30 wt.%, in particular 1 to 20 wt.%, or 3 to 10 wt.%, or 3 to 5 wt.%, 8 to 12 wt.%, or 10 to 12 wt.%.

Suitable cationic surfactants are, inter alia, the quaternary ammonium compounds of the formula (R^{vi})(R^{vii})(R^{viii})(R^{ix})N⁺X, in which R^{vi} to R^{ix} denote four identical or different, and in particular two long-chain and two short-chain, alkyl functional groups, and X⁻ denotes an anion, in particular a halide ion, e.g., didecyl dimethyl ammonium chloride, alkyl benzyl didecyl ammonium chloride and mixtures thereof. Further suitable cationic surfactants are the quaternary surface-active compounds, in particular having a sulfonium, phosphonium, iodonium or arsonium group, which are also known as antimicrobial washing agents. By using quaternary surface-active compounds having an antimicrobial action, the composition can be designed having an antimicrobial effect or whose antimicrobial effect, which may already be present due to other ingredients, can be improved.

Examples of cationic surfactants include, but are not limited to, alkyl dimethyl ethanol amine quat (ADMEAQ), cetyl trimethyl ammonium bromide (CTAB), dimethyl distearyl ammonium chloride (DSDMAC), and alkyl benzyl dimethyl ammonium, alkyl quaternary ammonium compounds, alkoxylated quaternary ammonium (AQA) compounds, ester quats, and combinations thereof.

When included therein, the cleaning composition according to the invention will usually comprise 0.01 to 10 wt.% semipolar (amphoteric) or zwitterionic surfactant. Suitable amphoteric surfactants are, e.g., betaines, such as alkyl dimethyl betaines, in particular those of the formula (Rⁱⁱⁱ)(R^{iv})(R^{v})N⁺CH₂COO⁻, in which Rⁱⁱⁱ denotes an alkyl functional group, which is optionally interrupted by heteroatoms or heteroatom groups, having 8 to 25, preferably 10 to 21, carbon atoms, and R^{iv} and R^{v} denote identical or different alkyl functional groups having 1 to 3 carbon atoms, in particular C₁₀₋₁₈ alkyl dimethyl carboxy methyl betaine and C₁₁₋₁₇ alkyl amido propyl dimethyl carboxy methyl betaine.

Examples of zwitterionic and/or semipolar surfactants include, but are not limited to, sulfo betaines and amine oxides (AO) such as alkyl dimethyl amine oxide, N-(coco alkyl)-N,N-dimethyl amine oxide and N-(tallow-alkyl)-N,N-bis(2-hydroxy ethyl)-amine oxide, and combinations thereof.

In various embodiments, the total amount of surfactants based on the weight of the composition is 1 to 40 wt.%, e.g., 2 to 30 wt.%, 3 to 35 wt.%, 5 to 25 wt.%, 5 to 30 wt.%, 10 to 20 wt.%, 4 to 20 wt.%, 14 to 18 wt.%, the (linear) alkyl benzene sulfonates being present at most in an amount of 0.001 to 30 wt.%, e.g., 0.001 to 10 wt.%, 2 to 6 wt.%, 3 to 5 wt.%, relative to the total weight of the composition.

In preferred embodiments, the cleaning composition comprises 2 to 20 wt.%, preferably 3 to 17 wt.% anionic surfactants, 1 to 10 wt.%, preferably 3 to 8 wt.%, non-ionic surfactants, 0 to 1 wt.%, preferably 0 to 0.5 wt.%, soap, and 0 to 5 wt.%, preferably 0 to 3 wt.% fatty acids, wherein the composition comprises less than 10 wt.% linear alkyl benzene sulfonates (LAS).

Preferred surfactant mixtures of cleaning compositions according to the invention comprises, based on the total weight of the composition,
- 5.6 wt.% anionic surfactants, 3.2 wt.% non-ionic surfactants, and 0.5 wt.% soap, wherein the composition comprises less than 3 wt.% LAS;
- 6.4 wt.% anionic surfactants, and 3.2 wt.% non-ionic surfactants, wherein the composition is substantially free of LAS, preferably free of LAS;
- 12.5% anionic surfactants, 5.5 wt.% non-ionic surfactants, and 3 wt.% fatty acids, wherein the composition comprises less than 6 wt.% LAS;
- 9.5 wt.% alkyl benzol sulphonate, 3.5 wt.% alkyl ether sulphate, 7.4 wt.% ethoxylated fatty alcohol, and 1.1 wt.% fatty acids;
- 5 to 13 wt.% anionic surfactants, 3 to 6 wt.% non-ionic surfactants, 0 to 1 wt.% soap, and 0 to 3wt.% fatty acids, wherein the composition is substantially free of LAS;
- 2 to 20 wt.% anionic surfactants, 1 to 10 wt.% non-ionic surfactants, 0 to 1 wt.% soap, and 0 to 5 wt.% fatty acids, wherein the cleaning composition comprises less than 10 wt.% LAS, preferably less than 6 wt.%, more preferably less than 3 wt.% LAS, particularly preferably being substantially free of LAS;
- 3 to 17 wt.% anionic surfactants, 3 to 8 wt.% non-ionic surfactants, 0 to 0.5 wt.% soap, and 0 to 3 wt.% fatty acids, wherein the cleaning composition comprises less than 10 wt.% LAS, preferably less than 6 wt.%, more preferably less than 3 wt.% LAS, particularly preferably being substantially free of LAS.

In preferred embodiments, the cleaning composition comprises less than 10 wt.% LAS, preferably less than 6 wt.%, more preferably less than 3 wt.% LAS. In more preferred embodiments, the cleaning composition is substantially free of LAS. "Substantially free of LAS" means in this context that the corresponding compositions contain less than 2 wt.%, preferably less than 1 wt.%, more preferably less than 0.5 wt.% and particularly preferably less than 0.1 wt.%, of LAS, based on the total weight of the composition. In particularly preferred embodiments, these compositions are free of LAS. Without wishing to being bound by theory, reducing LAS amount in cleaning composition might increase enzyme stability.

In various embodiments, the cleaning composition comprises a surfactant mixture that includes, but is not limited to, 5 to 15 wt.% anionic surfactants, < 5 wt.% non-ionic surfactants, cationic surfactants, phosphonates, soap, enzymes, perfume, butyl phenyl methyl propionate, geraniol, zeolite, polycarboxylates, hexyl cinnamal, limonene, cationic surfactants, citronellol, and benzisothiazolinone.

In various embodiments, the cleaning composition comprises at least one water-soluble and/or water-insoluble, organic and/or inorganic builder. The builders include in particular silicates, carbonates and organic (co-)builders. These builders/co-builders are also referred to as "complexing agents" or "complex builders" herein. In various embodiments, the cleaning composition comprises a builder system comprising at least one builder, preferably in an amount of 0.5 to 50 wt.%, more preferably 0.5 to 20 wt.%, particularly preferably 0.5 to 10 wt.%.

Water-soluble organic (co-)builders include in particular polycarboxylates/polycarboxylic acids, polymeric polycarboxylates, aspartic acid, polyacetals, dextrins, other organic co-builders and phosphonates. These classes of substances are described below. Organic builder substances may, if desired, be present in amounts up to 40 wt.%, in particular up to 25 wt.% and preferably from 1 to 8 wt.%. Useful organic builders are, e.g., polycarboxylic acids which can be used in the form of the free acid and/or its sodium salts, polycarboxylic acids being understood to mean those carboxylic acids which carry more than one acid function. For example, these are citric acid, adipic acid, succinic acid, glutaric acid, malic acid, tartaric acid, maleic acid, fumaric acid, sugar acids and carboxy methyl inulines, monomeric and polymeric amino polycarboxylic acids, in particular glycine diacetic acid, methyl glycine diacetic acid (MGDA), glutamine diacetic acid, glutamic acid diacetic acid (GLDA), nitrile triacetic acid (NTA), imino disuccinate such as ethylene diamine-N,N'-disuccinic acid and hydroxy imino disuccinates, ethylene diamine tetraacetic acid (EDTA) and polyaspartic acid, polyphosphonic acids, in particular amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), polymeric hydroxy compounds such as dextrin, and polymeric (poly)carboxylic acids, in particular those obtainable by oxidation of polysaccharides or dextrins, and/or polymeric acrylic acids, methacrylic acids, maleic acids and copolymers thereof, which may also contain small amounts of polymerizable substances without carboxylic acid functionality in polymerized form. Compounds of this class which are suitable, although less preferred, are copolymers of acrylic acid or methacrylic acid with vinyl ethers, such as vinyl methyl ethers, vinyl esters, ethylene, propylene, and styrene, in which the proportion of the acid is at least 50 wt.%. If desired, such organic builder substances may be present in an amount of 1 to 50 wt.%, more preferably 5 to 30 wt.%, particularly preferably 10 to 25 wt.%, e.g., in amounts of up to 50 wt.%, e.g., up to 25 wt.%, e.g., 30 to 50 wt.%, e.g., 10 to 20 wt.% e.g., 1 to 5 wt.%. All mentioned acids are generally used in the form of their water-soluble salts, in particular their alkali salts. In addition to their builder effect, the free acids typically also have the property of an acidifying component and thus also serve to adjust a lower and milder pH of detergents. In particular, citric acid, succinic acid, glutaric acid, adipic acid, gluconic acid and any mixtures thereof should be mentioned here.

In preferred embodiments, citric acid and/or citrate is used as the water-soluble organic builder. Particularly preferred is the use of 0.1 to 10 wt.%, preferably 0.2 to 5 wt.%, more preferably 0.2 to 2.5 wt.% citric acid and/or 0.1 to 10 wt.%, preferably 0.2 to 5 wt.%, more preferably 0.2 to 2.5 wt.% citrate, preferably alkali citrate, even more preferably sodium citrate. But even higher citric acid or citrate concentrations are possible, in particular up to 25 wt.%. Citric acid/citrate can each be used in the form of their hydrates, e.g., citric acid can be used in the form of the monohydrate, citrate in the form of the trisodium citrate dihydrate.

In further preferred embodiments, builder substances are selected from methyl glycine diacetic acid (MGDA), glutamic acid diacetic acid (GLDA), aspartic acid diacetate (ASDA), hydroxy ethyl imino diacetate (HEIDA), imino disuccinate (IDS) and ethylene diamine disuccinate (EDDS), carboxy methyl inulin and polyaspartate. In even more preferred embodiments, the builder substances are selected from MGDA and GLDA. As used herein, the term "MGDA" includes, but not limited to, methyl glycine diacetic acid, α-alanine diacetic acid, N-(1-carboxyethyl)-iminodiacetic acid, and N,N-bis(carboxymethyl)-DL-alanine, thereby encompassing free acid forms and respective salts, preferably alkali salts, in particular trisodium salts. As used herein, the term "GLDA" includes, but not limited to, glutamic acid diacetic acid, L-glutamic acid-N,N-diacetic acid and N,N-bis(carboxylatomethyl)-L-glutamate, thereby encompassing free acid forms and respective salts, preferably alkali salts, in particular tetrasodium salts. Although higher MGDA or GLDA concentrations are possible, in particular up to 25 wt.%, particularly preferred is the use of 0.2 to 5 wt.%, preferably 0.25 to 3 wt.%, more preferably 0.5 to 2 wt.% MGDA, preferably MGDA-trisodium salt (MGDA-Nas). Even more preferred is the use of 0.2 to 5 wt.%, preferably 0.25 to 3 wt.%, more preferably 0.5 to 2 wt.% GLDA, preferably GLDA-tetrasodium salt (GLDA-Na₄).

In various embodiments, the builders/co-builders comprise citric acid/citrate, MGDA, GLDA, EDTA, or a combination thereof. In various embodiments, the compositions comprise EDTA and citrate/citric acid. In various embodiments, the builders/co-builders comprise citric acid/citrate, MGDA, GLDA, EDTA, HEDP, DTPMP, or a combination thereof. In various embodiments, the compositions comprise GLDA and citrate/citric acid. In various embodiments, the compositions comprise MGDA and citrate/citric acid. In various embodiments, the compositions comprise GLDA, HEDP and citrate/citric acid. In various embodiments, the compositions comprise HEDP and citrate/citric acid. In various embodiments, the compositions comprise GLDA, DTPMP and citrate/citric acid. In various embodiments, the compositions comprise DTPMP and citrate/citric acid.

In preferred embodiments, the cleaning compositions comprise a builder system, wherein said builder system comprises
(i) 0 to 10 wt.%, preferably 1 to 4 wt.% citric acid and/or citrate, preferably alkali citrate,
(ii) 0 to 40 wt.%, preferably 0 to 15 wt.%, more preferably 1 to 3 wt.%, alkali carbonate, preferably sodium carbonate,
(iii) 0 to 20 wt.%, preferably 3 to 10 wt.% alkali silicate, 0 to 10 wt.%, preferably 0.5 to 2 wt.%, phosphonic acid and/or alkali phosphonate, particular preferably HEDP and/or DTPMP, and/or
(iv) 0 to 10 wt.%, preferably 0.5 to 3 wt.%, polycarboxylate, preferably MGDA and/or GLDA, each based on the total weight of the composition.

Further preferred builder systems comprise, based on the total weight of the composition,
- 0.23 wt.% citric acid, 0 to 0.2 wt.% DTPMP, and 0 to 0.5 wt.% GLDA;
- 2.5 wt.% citric acid, 0.5 wt.% DTPMP;
- 2 to 2.5 wt.% citric acid, 0 to 0.7 wt.% HEDP, and 0 to 1.8 wt.% GLDA;
- 2 to 2.5 wt.% citric acid, 0 to 0.4 wt.% DTPMP, and 0 to 1.8 wt.% GLDA;
- 2 to 2.5 wt.% citric acid, 0 to 0.7 wt.% HEDP, and 0 to 0.5 wt.% GLDA;
- 1.5 to 2.5 wt.% citric acid, 0 to 0.4 wt.% DTPMP, and 0 to 1.8 wt.% GLDA;
- 1.5 to 2.5 wt.% citric acid, 0 to 0.7 wt.% HEDP, and 0 to 0.5 wt.% GLDA;

In preferred embodiments, the compositions according to the invention are substantially free of phosphonate-containing compounds. "Substantially free of phosphonate-containing compounds" means in this context that the corresponding compositions contain less than 2 wt.%, preferably less than 1 wt.%, more preferably less than 0.5 wt.% and particularly preferably less than 0.1 wt.%, of phosphonate-containing compounds, based on the total weight of the composition. In particularly preferred embodiments, these compositions are free of phosphonate-containing compounds.

Organic builders, if desired, can be comprised in amounts of up to 40 wt.%, in particular up to 25 wt.%, and preferably from 1 to 8 wt.%. Amounts close to the stated upper limit are preferably used in paste-form or liquid, in particular water-containing, compositions according to the invention. Laundry post-treatment compositions according to the invention, such as softeners, can optionally also be free of organic builders.

Suitable water-soluble inorganic builder materials are, in particular, alkali silicates and, if there are no concerns about their use, also polyphosphates, preferably sodium triphosphate. The cleaning compositions according to the invention are preferably substantially phosphate-free, more preferably phosphate-free. "Substantially free of phosphate" means in this context that the corresponding compositions contain less than 2 wt.%, preferably less than 1 wt.%, more preferably less than 0.5 wt.% and particularly preferably less than 0.1 wt.%, of phosphate based on the total weight of the composition. In particularly preferred embodiments, these compositions are free of phosphate. In particular crystalline or amorphous alkali aluminosilicates, if desired, can be used as water-insoluble, water-dispersible inorganic builder materials in amounts of up to 50 wt.%, preferably no greater than 40 wt.%, and in liquid agents in particular in amounts of 1 to 5 wt.%. Among these, crystalline sodium aluminosilicates of washing agent quality, in particular zeolite A, P and optionally X, are preferred. Amounts close to the stated upper limit are preferably used in solid particulate agents. Suitable aluminosilicates have in particular no particles having a particle size greater than 30 µm and preferably comprise at least 80 wt.% of particles having a size smaller than 10 µm. Suitable substitutes or partial substitutes for the stated aluminosilicate are crystalline alkali silicates, which may be present alone or in a mixture with amorphous silicates. In various embodiments, the alkali silicates have a molar ratio of alkali oxide to SiO₂ of less than 0.95, in particular from 1:1.1 to 1:12, and may be present in amorphous or crystalline form. Preferred alkali silicates are sodium silicates, in particular amorphous sodium silicates having a Na₂O:SiO₂ molar ratio of from 1:2 to 1:2.8. Preferably used as crystalline silicates, which may be present alone or in a mixture with amorphous silicates, are crystalline phyllosilicates of general formula Na₂SiₓO₂ₓ₊₁ • y H₂O, where x, referred to as the module, is a number from 1.9 to 4, y is a number from 0 to 20, and preferred values for x are 2, 3 or 4. Preferred crystalline phyllosilicates are those in which x in the stated general formula assumes the values 2 or 3. In particular, both β-sodium and δ-sodium disilicates (Na₂Si₂O₅ • y H₂O) are preferred. Practically water-free crystalline alkali silicates of the above general formula, in which x is a number from 1.9 to 2.1, which alkali silicates are produced from amorphous alkali silicates, may also be used. In various embodiments, a crystalline sodium phyllosilicate having a module of from 2 to 3, as can be produced from sand and soda, is used. Crystalline sodium silicates having a module in the range of from 1.9 to 3.5 are used in a further embodiment. If alkali aluminosilicate, in particular zeolite, is also present as an additional builder, the weight ratio of aluminosilicate to silicate, in each case based on water-free active substances, is preferably from 1:10 to 10:1. In compositions comprising both amorphous and crystalline alkali silicates, the weight ratio of amorphous alkali silicate to crystalline alkali silicate is preferably from 1:2 to 2:1 and in particular from 1:1 to 2:1.

Builders are, if desired, preferably comprised in the compositions according to the invention in amounts of up to 60 wt.%, in particular from 5 to 40 wt.%. More preferably the compositions comprise 0.5 to 50 wt.%, preferably 0.5 to 20 wt.%, particularly preferably 0.5 to 10 wt.% builder. Water-soluble builders are particularly preferred in liquid formulations. Laundry post-treatment compositions according to the invention, e.g., softeners, are preferably free of inorganic builders.

In various embodiments, the cleaning composition comprises further enzymes in addition to the polyesterase. Various embodiments of the invention thus represents cleaning compositions which comprise at least one polyesterase and at least one further enzyme. All enzymes which can develop catalytic activity in cleaning compositions according to the invention, in particular acyl transferases, α-amylases, β-amylases, α-galactosidases, arabinosidases, aryl esterases, β-galactosidases, carrageenases, catalases, cellobiohydrolases, cellulases, chondroitinases, cutinases, DNases, endoglucanases, endo-β-1,4-glucanases, endo-β-mannanases, esterases, exo-mannanases, galactanases, glucoamylases, haloperoxygenases, hemicellulases, hexoaminidases, hyaluronidases, keratinases, laccases, lactases, ligninases, lipases, lipoxygenases, mannanases, metalloproteases, nucleases (e.g., deoxyribonucleases and ribonucleases), oxidases, oxidoreductases, pectate lyases, pectin acetyl esterases, pectinases, pectin lyases, pentosanases, peroxidases, phenoloxidases, phosphatases, phospholipases, phytases, polygalacturonases, polyesterases, proteases, pullulanases, reductases, rhamnogalacturonases, β-glucanases, tannases, transglutaminases, xanthanases, xylan acetyl esterases, xylanases, xyloglucanases, xylosidases, and any combination or mixture thereof, can preferably be used as such additional enzymes. Various embodiments are directed to a combination of enzymes (i.e., a "cocktail") comprising enzymes like amylase, protease, cellulase, lipase, mannanase, and/or nuclease in combination with one or more polyesterase in the compositions provided herein. Specific enzymes suitable for the detergent compositions of the invention are described below.

Enzymes are included in the composition advantageously in an amount of from 1 × 10⁻⁸ to 5 wt.% active enzyme protein. Increasingly preferably, each enzyme is included in compositions according to the invention in an amount of 1 × 10⁻⁷ to 3 wt.%, 0.00001 to 1 wt.%, 0.00005 to 0.5 wt.%, 0.0001 to 0.1 wt.% and particularly preferably 0.0001 to 0.05 wt.%, active enzyme protein. Particularly preferably, the enzymes exhibit synergistic cleaning performance on specific stains or spots, i.e., the enzymes comprised in the composition support one another in their cleaning performance. Synergistic effects can arise not only between different enzymes, but also between one or more enzymes and other ingredients of the composition according to the invention.

The protein concentration can be determined using known methods, e.g., the BCA method (bicinchoninic acid; 2,2'-bichinolyl-4,4'-dicarboxylic acid) or the Biuret method. The active protein concentration is determined by titrating the active centers using a suitable irreversible inhibitor (e.g., phenyl methyl sulfonyl fluoride (PMSF) for proteases) and determining the residual activity (M. Bender et al., J. Am. Chem. Soc. 1966, 88 (24): 5890-5913).

In various embodiments, the cleaning composition comprises at least one polyesterase, as described herein.

In various embodiments, the cleaning composition comprises at least one polyesterase, as described herein, and at least one cellulase.

In various embodiments, the cleaning composition comprises at least one polyesterase, as described herein, and at least one further enzyme, the at least one further enzyme being selected from the group consisting of protease, amylase, lipase, mannanase, pectate lyase, or mixtures thereof.

In various embodiments, the cleaning composition comprises at least one polyesterase, as described herein, at least one cellulase and at least one further enzyme, the at least one further enzyme being selected from the group consisting of protease, amylase, lipase, mannanase, pectate lyase, or mixtures thereof.

In various embodiments, the cleaning composition comprises at least one polyesterase, as described herein, and at least one cellulase. In various embodiments, the composition comprises 0.00001 to 5 wt.%, 0.0001 to 3 wt.%, 0.001 to 2 wt.%, 0.001 to 1 wt.%, or 0.005 to 0.5 wt.% cellulase (active enzyme protein) by weight composition. Any suitable cellulase may find use in a composition according to the invention. An exemplary cellulase can be a chemically or genetically modified mutant. Exemplary commercial cellulases include, but are not limited to, CELLUCLEAN^{®}, CELLUZYME^{®}, CAREZYME^{®}, ENDOLASE^{®}, RENOZYME^{®}, CAREZYME^{®} PREMIUM, and WHITEZYME^{™} (Novozymes); REVITALENZ^{™} 100, REVITALENZ^{™} 200/220, and REVITALENZ^{®} 2000 (DuPont); KAC-500(B)^{™} (Kao Corporation); and BIOTOUCH^{®} (AB Enzymes).

In various embodiments, the cleaning composition comprises at least one polyesterase, as described herein, and at least one protease. In various embodiments, the cleaning composition comprises at least one polyesterase, as described herein, at least one cellulase, and at least one protease. In various embodiments, the cleaning composition comprises 0.00001 to 5 wt.%, 0.0001 to 3 wt.%, 0.001 to 2 wt.%, 0.001 to 1 wt.%, or 0.005 to 0.5 wt.% protease (active enzyme protein) by weight composition. The protease for use in compositions of the present invention include any polypeptide having protease activity. In various embodiments, the additional protease is a serine protease. In various embodiments, the additional protease is a metalloprotease, a fungal subtilisin, or an alkaline microbial protease or a trypsin-like protease. Suitable proteases include those of animal, vegetable or microbial origin. In various embodiments, the protease is a microbial protease. In various embodiments, the protease is a chemically or genetically modified mutant. In various embodiments, the protease is subtilisin like protease or a trypsin-like protease. In various embodiments, the additional protease does not comprise cross-reactive epitopes with the variant as measured by antibody binding or other assays available in the art. Exemplary subtilisin proteases include those derived from, e.g., *Bacillus* (e.g., BPN', Carlsberg, subtilisin 309, subtilisin 147, and subtilisin 168), or fungal origin. Exemplary additional proteases include, but are not limited to, trypsin (e.g., of porcine or bovine origin) and the *Fusarium* protease. Exemplary commercial proteases include, but are not limited to, MAXATASE^{®}, MAXACAL^{™}, MAXAPEM^{™}, OPTICLEAN^{®}, OPTIMASE^{®}, PROPERASE^{®}, PURAFECT^{®}, PURAFECT^{®} OXP, PURAMAX^{™}, EXCELLASE^{™}, PREFERENZ^{™} proteases (e.g., P100, P110, P280), EFFECTENZ^{™} proteases (e.g., P1000, P1050, P2000), EXCELLENZ^{™} proteases (e.g., P1000), ULTIMASE^{®}, and PURAFAST^{™} (DuPont); ALCALASE^{®}, BLAZE^{®}, BLAZE^{®} variants, BLAZE^{®} EVITY^{®}, BLAZE^{®} EVITY^{®} 16L, CORONASE^{®}, SAVINASE^{®}, SAVINASE^{®} ULTRA, SAVINASE^{®} EVITY^{®}, SAVINASE^{®} EVERIS^{®}, PRIMASE^{®}, DURAZYM^{™}, POLARZYME^{®}, OVOZYME^{®}, KANNASE^{®}, LIQUANASE^{®}, LlQUANASE EVERIS^{®}, NEUTRASE^{®}, PROGRESS UNO^{®}, RELASE^{®}, and ESPERASE^{®} (Novozymes); BLAP^{™} and BLAP^{™} variants (Henkel); LAVERGY^{™} PRO 104 L, LAVERGY^{™} PRO 106 LS, LAVERGY^{™} PRO 114 LS (BASF), KAP (*B*. *alkalophilus* subtilisin (Kao)) and BIOTOUCH^{®} (AB Enzymes).

In various embodiments, the cleaning composition comprises at least one polyesterase, as described herein, and at least one amylase. In various embodiments, the cleaning composition comprises at least one polyesterase, as described herein, at least one cellulase, and at least one amylase. In various embodiments, the composition comprises 0.00001 to 5 wt.%, 0.0001 to 3 wt.%, 0.001 to 2 wt.%, 0.001 to 1 wt.%, or 0.005 to 0.5 wt.% amylase (active enzyme protein) by weight composition. Any amylase (e.g., alpha and/or beta) suitable for use in alkaline solutions may be useful to include in such composition. An exemplary amylase can be a chemically or genetically modified mutant. Exemplary commercial amylases include, but are not limited to, AMPLIFY^{®}, AMPLIFY^{®} PRIME, DURAMYL^{®}, TERMAMYL^{®}, FUNGAMYL^{®}, STAINZYME^{®}, STAINZYME PLUS^{®}, STAINZYME ULTRA^{®} EVITY^{®}, and BAN^{™} (Novozymes); EFFECTENZ^{™} S1000, POWERASE^{™}, PREFERENZ^{™} (S100, S110, S210), EXCELLENZ^{™} (S2000, S3300), RAPIDASE^{®} and MAXAMYL^{®} P (DuPont).

In various embodiments, the cleaning composition comprises at least one polyesterase, as described herein, and at least one lipase. In various embodiments, the cleaning composition comprises at least one polyesterase, as described herein, at least one cellulase, and at least one lipase. In various embodiments, the composition comprises 0.00001 to 5 wt.%, 0.0001 to 3 wt.%, 0.001 to 2 wt.%, 0.001 to 1 wt.%, or 0.005 to 0.5 wt.% lipase (active enzyme protein) by weight composition. An exemplary lipase can be a chemically or genetically modified mutant. Exemplary lipases include, but are not limited to, e.g., those of bacterial or fungal origin, such as, e.g., *H. lanuginosa* lipase, *T. lanuginosa* lipase, *Rhizomucor miehei* lipase, *Candida* lipase, such as *C. antarctica* lipase (e.g., *C*. *antarctica* lipase A or B), *Pseudomonas* lipases such as *P*. *alcaligenes* and *P. pseudoalcaligenes* lipase, *P*. *cepacia* lipase, *P. stutzeri* lipase, *P. fluorescens* lipase, *Bacillus* lipase *B*. *stearothermophilus* lipase, and *B. pumilus* lipase. Exemplary cloned lipases include, but are not limited to, *Penicillium camembertii* lipase, *Geotrichum candidum* lipase, and various *Rhizopus* lipases, such as, *R*. *delemar* lipase, *R. niveus* lipase and *R*. *oryzae* lipase. Other lipolytic enzymes, such as cutinases, may also find use in one or more composition according to the invention, including, but not limited to, e.g., cutinase derived from *Pseudomonas mendocina* and/or *Fusarium solani pisi.* Exemplary commercial lipases include, but are not limited to, M1 LIPASE^{™}, LUMA FAST^{™}, and LIPOMAX^{™} (DuPont); LIPEX^{®}, LIPEX^{®} EVITY, LIPOCLEAN^{®}, LIPOLASE^{®} and LIPOLASE^{®} ULTRA (Novozymes); and LIPASE P^{™} (Amano Pharmaceutical Co. Ltd), as well as BIOTOUCH^{®} (AB Enzymes).

In various embodiments, the cleaning composition comprises at least one polyesterase, as described herein, and at least one mannanase. In various embodiments, the cleaning composition comprises at least one polyesterase, as described herein, at least one cellulase, and at least one mannanase. In various embodiments, the composition comprises 0.00001 to 5 wt.%, 0.0001 to 3 wt.%, 0.001 to 2 wt.%, 0.001 to 1 wt.%, or 0.005 to 0.5 wt.% mannanase (active enzyme protein) by weight composition. Any suitable mannanase may find use in a composition according to the invention. An exemplary mannanase can be a chemically or genetically modified mutant. Exemplary commercial mannanases include, but are not limited to, MANNAWAY^{®} (Novozymes) and EFFECTENZ^{™} M1000, EFFECTENZ^{™} M2000, PREFERENZ^{®} M100, MANNASTAR^{®}, and PURABRITE^{™} (DuPont), as well as BIOTOUCH^{®} (AB Enzymes).

In various embodiments, the cleaning composition comprises at least one polyesterase, as described herein, and at least one pectate lyase. In various embodiments, the cleaning composition comprises at least one polyesterase, as described herein, at least one cellulase, and at least one pectate lyase. In various embodiments, the composition comprises 0.00001 to 5 wt.%, 0.0001 to 3 wt.%, 0.001 to 2 wt.%, 0.001 to 1 wt.%, or 0.005 to 0.5 wt.% pectate lyase (active enzyme protein) by weight composition. Pectate lyases have been cloned from various bacterial genera including *Erwinia, Pseudomonas, Klebsiella, Bacillus* and *Xanthomonas.* Pectate lyases are generally characterized by an alkaline pH optimum and an absolute requirement for divalent cations, with Ca²⁺ being the most stimulatory. Pectate lyase (EC 4.2.2.2) or α-1,4-D-galacturonan lyase catalyzes the cleavage of α-1,4-D-galacturonan to oligosaccharides with 4-deoxy-α-D-galact-4-enuronosyl groups at their non-reducing ends. Examples of other names include, but are not limited to, "pectate transeliminase", "polygalacturon transeliminase", or "endopectin methyltranseliminase". Pectate lyases suitable for washing and cleaning compositions are described, e.g., in WO 2003/095638 or WO 2015/121133. Examples of suitable pectinolytic enzymes include, but are not limited to, enzymes described under the trade names Gamanase^{®}, Pektinex AR^{®}, X-Pect^{®} or Pectaway^{®} (Novozymes), under the trade names Rohapect UF^{®}, Rohapect TPL^{®}, Rohapect PTE100^{®}, Rohapect MPE^{®}, Rohapect MA plus HC, Rohapect DA12L^{®}, Rohapect 10L^{®}, Rohapect B1L^{®} (AB Enzymes), and under the trade name Pyrolase^{®} (Diversa Corp.)

In various embodiments, the cleaning composition comprises one or more enzyme stabilizer. In various embodiments, the enzyme stabilizer is a water-soluble source of calcium and/or magnesium ions. In various embodiments, the enzyme stabilizers include oligosaccharides, polysaccharides, and inorganic divalent metal salts, including alkaline earth metals, such as calcium salts. In various embodiments, the enzymes employed herein are stabilized by the presence of water-soluble sources of zinc (II), calcium (II) and/or magnesium (II) ions in the finished compositions that provide such ions to the enzymes, as well as other metal ions (e.g., barium (II), scandium (II), iron (II), manganese (II), aluminum (III), tin (II), cobalt (II), copper (II), nickel (II), and oxovanadium (IV)). Chlorides and sulfates also find use in various embodiments. Exemplary oligosaccharides and polysaccharides (e.g., dextrins) are described, e.g., in WO 2007/145964. In various embodiments, the cleaning composition comprises reversible protease inhibitors selected from the group consisting of a boron-containing compound (e.g., boric acid, borate, 4-formyl phenyl boronic acid, and phenyl-boronic acid derivatives, such as, e.g., described in WO 96/41859), a peptide aldehyde (such as, e.g., described in WO 2009/118375 and WO 2013/004636), and combinations thereof.

In preferred embodiments, the cleaning composition is substantially free of boron-containing compounds, preferably comprising less than 1 wt.% boron-containing components, more preferably less than 0.5 wt.%, even more preferably being free of boron-containing components. "Substantially free of boron-containing compounds" means in this context that the corresponding compositions contain less than 2 wt.%, preferably less than 1 wt.%, more preferably less than 0.5 wt.% and particularly preferably less than 0.1 wt.%, of boron-containing compounds, "boron-containing compounds" in particular comprising in this respect boric acid, borate, 4-formyl phenyl boronic acid, and phenyl-boronic acid derivatives, based on the total weight of the composition. In particularly preferred embodiments, the cleaning composition is free of boron-containing compounds. More preferably, cleaning compositions according to the invention are substantially free of boric acid, borate, 4-formyl phenyl boronic acid, and phenyl-boronic acid derivatives. Even more preferably, cleaning compositions according to the invention are free of boric acid, borate, 4-formyl phenyl boronic acid, and phenyl-boronic acid derivatives.

The enzymes to be used may furthermore be formulated together with accompanying substances, e.g., from fermentation. In liquid formulations, the enzymes are preferably used as enzyme liquid formulations. The enzymes are generally not provided in the form of pure protein, but rather in the form of stabilized, storable and transportable preparations. These pre-formulated preparations include, e.g., the solid preparations obtained through granulation, extrusion, or lyophilization or, in particular in the case of liquid or gel agents, solutions of the enzymes, advantageously maximally concentrated, low-water, and/or supplemented with stabilizers or other auxiliaries. Alternatively, the enzymes can also be encapsulated, for both the solid and the liquid administration form, e.g., by spray-drying or extrusion of the enzyme solution together with a preferably natural polymer or in the form of capsules, e.g., those in which the enzymes are enclosed in a set gel, or in those of the core-shell type, in which an enzyme-containing core is coated with a water-, air-, and/or chemical-impermeable protective layer. Other active ingredients such as stabilizers, emulsifiers, pigments, bleaching agents, or dyes can additionally be applied in overlaid layers. Such capsules are applied using inherently known methods, e.g., by shaking or roll granulation or in fluidized bed processes. Such granules are advantageously low in dust, e.g., due to the application of polymeric film-formers, and stable in storage due to the coating. Moreover, it is possible to formulate two or more enzymes together, such that a single granule exhibits a plurality of enzyme activities.

Reducing agents and antioxidants increase the stability of the enzymes against oxidative decay; for this purpose, sulfur-containing reducing agents are common, such as sodium sulfite and reducing sugars.

In various embodiments, the cleaning composition is liquid and comprises water as the main solvent, i.e., they are aqueous agents. In various embodiments, the water content of the aqueous cleaning composition is usually 15 to 70 wt.%, preferably 20 to 60 wt.%. In various embodiments, the water content is more than 5 wt.%, preferably more than 15 wt.% and particularly preferably more than 50 wt.%, of water, in each case based on the total weight of the composition.

In various embodiments in addition, non-aqueous solvents can be added to the composition. Suitable non-aqueous solvents include monovalent or polyvalent alcohols, alkanol amines or glycol ethers, if they can be mixed with water in the stated concentration range. Preferably, the solvents are selected from ethanol, n-propanol, i-propanol, butanol, glycol, propane diol, butane diol, methyl propane diol, glycerol, diglycol, propyl diglycol, butyl diglycol, hexylene glycol, ethylene glycol methyl ether, ethylene glycol ethyl ether, ethylene glycol propyl ether, ethylene glycol mono-n-butyl ether, diethylene glycol methyl ether, diethylene glycol ethyl ether, propylene glycol methyl ether, propylene glycol ethyl ether, propylene glycol propyl ether, dipropylene glycol mono methyl ether, dipropylene glycol mono ethyl ether, methoxy triglycol, ethoxy triglycol, butoxy triglycol, 1-butoxy ethoxy-2-propanol, 3-methyl-3-methoxy butanol, propylene-glycol-t-butyl ether, di-n-octyl ether and mixtures thereof. In various embodiments, the one or more non-aqueous solvents are usually present in an amount of 0.1 to 10 wt.%, preferably 1 to 8 wt.%, more preferably 0.1 to 5 wt.%, based on the total weight of the composition.

Performance polymers include various components, in particular polymers, which impart an additional stain removal effect and/or textile care effect to the detergent. In various embodiments, the cleaning composition comprises at least one performance polymer, preferably in an amount of 0.1 to 1.0 wt.%, more preferably 0.15 to 0.8 wt.%, particularly preferably 0.3 to 0.6 wt.%, based on total weight of the cleaning composition In various embodiments, the performance polymer is selected from the group consisting of soil release polymer, dye transfer inhibitor, performance booster, performance booster for bleachable stains, anti-redeposition agents, dispersants, graying inhibitor, and mixtures thereof. In various embodiments, performance polymers are included in amounts of 0.05 to 5 wt.-%, preferably 0.1 to 2 wt.%, particularly preferably 0.05 to 0.5 wt.%, based on the total weight of the composition.

In various embodiments, the cleaning composition comprises components which positively influence the oil and grease washability from textiles, so-called soil release agents. This effect is particularly evident when a textile is soiled that has already been washed several times previously with an agent containing such oil and grease-releasing components. Preferred oil- and grease-removing components include, e.g., non-ionic cellulose ethers such as methyl cellulose and methyl hydroxypropyl cellulose with a proportion of methoxyl groups of 15 to 30% and of hydroxypropoxyl groups of 1 to 15%, in each case based on the non-ionic cellulose ether, as well as the polymers of phthalic acid and/or terephthalic acid or derivatives thereof with monomeric and/or polymeric diols known from the prior art, in particular polymers of ethylene terephthalates and/or polyethylene glycol terephthalates or anionically and/or non-ionically modified derivatives thereof. Such polymers are commercially available, e.g., under the trade name Texcare^{®}. In various embodiments, the cleaning composition comprises soil release polymers in an amount of 0.1 to 0.8 wt.%, preferably 0.32 to 0.6 wt.%.

In various embodiments, soil release polymers that are used are acrylic copolymers, e.g., the copolymer of ((2-methacryloyloxy)-ethyl)-trimethyl ammonium chloride commercially available under the trade name Sokalan^{®} SR 400.

In various embodiments, co-polymers based on polyethylene imine, polyvinyl acetate and polyethylene glycol can be used as anti-redeposition agents.

In various embodiments, the cleaning composition comprises at least one dye transfer inhibitor, preferably in amounts of 0.1 to 2 wt.%, more preferably 0.1 to 1 wt.%, particular preferably 0.15 to 0.8 wt.%. In various embodiments, the dye transfer inhibitor is a polymer or copolymer of cyclic amines such as vinyl pyrrolidone and/or vinyl imidazole. Polymers suitable as dye transfer inhibitors include, but are not limited to, polyvinyl pyrrolidone (PVP), polyvinyl imidazole (PVI), copolymers of vinyl pyrrolidone and vinyl imidazole (PVP/PVI), polyvinyl pyridine-N-oxide, poly-N-carboxymethyl-4-vinyl pyridium chloride, polyethylene glycol-modified copolymers of vinyl pyrrolidone and vinyl imidazole, and mixtures thereof. In preferred embodiments, dye transfer inhibitors include polymers of vinyl pyrrolidone, vinyl imidazole, vinyl pyridine-N-oxide or copolymers thereof. Polyvinyl pyrrolidone (PVP), polyvinyl imidazole (PVI) or copolymers of vinyl pyrrolidone and vinyl imidazole (PVP/PVI) are particularly preferred as dye transfer inhibitors. The polyvinyl pyrrolidones (PVP) used preferably have an average molecular weight of 2500 to 400000 and are commercially available from ISP Chemicals as PVP K 15, PVP K 30, PVP K 60 or PVP K 90 or from BASF as Sokalan^{®} HP 50 or Sokalan^{®} HP 53. The copolymers of vinyl pyrrolidone and vinyl imidazole (PVP/PVI) used preferably have a molecular weight in the range of 5000 to 100000 g/mol. A PVP/PVI copolymer is commercially available, e.g., from BASF as Sokalan^{®} HP 56. Another preferred dye transfer inhibitor is polyethylene glycol-modified copolymers of vinyl pyrrolidone and vinyl imidazole, which are available, e.g., from BASF as Sokalan^{®} HP 66.

In various embodiments, the cleaning composition comprises at least one graying inhibitor. Graying inhibitors have the function of keeping the dirt detached from the textile fiber suspended in the liquor. Water-soluble colloids of mostly organic nature are suitable for this purpose, e.g., starch, glue, gelatin, salts of ether carboxylic acids or ether sulfonic acids of starch or cellulose, or salts of acid sulfuric acid esters of cellulose or starch. Water-soluble polyamides containing acidic groups are also suitable for this purpose. Furthermore, starch derivatives other than those mentioned above can be used, e.g., aldehyde starches. Preferably, cellulose ethers, such as carboxy methyl cellulose (Na salt), methyl cellulose, hydroxyalkyl cellulose and mixed ethers, such as methyl hydroxyethyl cellulose, methyl hydroxypropyl cellulose, methyl carboxymethyl cellulose and mixtures thereof. In various embodiments, the cleaning composition comprises at least one graying inhibitor in an amount of 0.05 to 5 wt.-%, preferably 0.1 to 2 wt.%, particularly preferably 0.05 to 0.5 wt.%, based on the total weight of the composition.

In preferred embodiments, suitable performance polymers also comprise polyalkoxylated polyalkylene imines, such as (poly)ethoxylated polyethylene imines. The polyalkoxylated polyalkylene imines are polymers having a polyalkylene imine backbone bearing polyalkoxy groups on the N atoms. It preferably has a weight average molecular weight Mw in the range from 5000 to 60000 g/mol, in particular from 10000 to 22500 g/mol. The polyalkylene imine has primary amino functions at its terminals and preferably both secondary and tertiary amino functions in its interior; optionally, it may also have only secondary amino functions in its interior, resulting in a linear polyalkylene imine rather than a branched chain polyalkylene imine. The ratio of primary to secondary amino groups in the polyalkylene imine is preferably in the range from 1:0.5 to 1:1.5, in particular in the range from 1:0.7 to 1:1. The ratio of primary to tertiary amino groups in the polyalkylene imine is preferably in the range from 1:0.2 to 1:1, in particular in the range from 1:0.5 to 1:0.8. Preferably, the polyalkylene imine has a weight average molecular weight in the range from 500 to 50000 g/mol, in particular from 550 to 2000 g/mol. The N atoms in the polyalkylene imine are preferably separated from one another by alkylene groups having 2 to 12 C atoms, in particular 2 to 6 C atoms, wherein not all alkylene groups need to have the same number of C atoms. Ethylene groups, 1,2-propylene groups, 1,3-propylene groups, and mixtures thereof are particularly preferred. The primary amino functions in the polyalkylene imine may carry 1 or 2 polyalkoxy groups and the secondary amino functions may carry 1 polyalkoxy group, although not every amino function has to be alkoxy group substituted. The average number of alkoxy groups per primary and secondary amino function in the polyalkoxylated polyalkylene imine is preferably 5 to 100, in particular 10 to 50. The alkoxy groups in the polyalkoxylated polyalkylene imine are preferably ethoxy, propoxy or butoxy groups or mixtures thereof. Polyethoxylated polyethylene imines are particularly preferred. The polyalkoxylated polyalkylene imines are accessible by reacting the polyalkylene imines with epoxides corresponding to the alkoxy groups. Desirably, the terminal OH function of at least some of the polyalkoxy substituents may be replaced by an alkyl ether function having 1 to 10, in particular 1 to 3, carbon atoms. Such a polyalkoxylated polyalkylene imine is available, e.g., from BASF as Sokalan^{®} HP 20. In preferred embodiments, the at least one performance polymer is such polyalkoxylated polyalkylene imine, in particular (poly)ethoxylated polyethylene imine.

In various embodiments, in addition to the components mentioned so far, the cleaning composition comprises other ingredients that further improve the practical and/or aesthetic properties of the cleaning composition. These include, e.g., additives for improving the flow and drying behavior, for adjusting the viscosity, and/or for stabilization and other auxiliary and additional substances that are customary in cleaning composition, such as UV stabilizers, perfume, pearlescent agents, dyes, corrosion inhibitors, preservatives, bitterns, organic salts, disinfectants, structuring polymers, defoamers, encapsulated ingredients (e.g., encapsulated perfume), pH adjusters and skin-feel-improving or nourishing additives.

Polymeric thickening agents within the meaning of the present invention are the polycarboxylates which have a thickening action as polyelectrolytes, preferably homo- and co-polymerizates of acrylic acid, in particular acrylic acid copolymers such as acrylic acid-methacrylic acid copolymers, and the polysaccharides, in particular heteropolysaccharides, and other conventional thickening polymers. Suitable polysaccharides or heteropolysaccharides are the polysaccharide gums, e.g., gum arabic, agar, alginates, carrageenans and their salts, guar, guar gum, tragacanth, gellan, ramsan, dextran or xanthan and their derivatives, e.g., propoxylated guar, and mixtures thereof. Other polysaccharide thickeners, such as starches or cellulose derivatives, may alternatively or preferably be used in addition to a polysaccharide gum, e.g., starches of various origins and starch derivatives, e.g., hydroxy ethyl starch, starch phosphate esters or starch acetates, or carboxy methyl cellulose or its sodium salt, methyl, ethyl, hydroxy ethyl, hydroxy propyl, hydroxy propyl methyl or hydroxy ethyl methyl cellulose or cellulose acetate. Acrylic acid polymers suitable as polymeric thickening agents are, e.g., high-molecular-weight homopolymers of acrylic acid (INCI: carbomer) cross-linked with a polyalkenyl polyether, in particular an allyl ether of sucrose, pentaerythritol or propylene, also referred to as carboxy vinyl polymers. However, particularly suitable polymeric thickening agents are the following acrylic acid copolymers: (i) copolymers of two or more monomers from the group of acrylic acid, methacrylic acid and their simple esters, preferably formed with C₁₋₄ alkanols (INCI: acrylates copolymer) which include, e.g., the copolymers of methacrylic acid, butyl acrylate and methyl methacrylate (CAS 25035-69-2) or butyl acrylate and methyl methacrylate (CAS 25852-37-3); (ii) cross-linked high-molecular-weight acrylic acid copolymers, which include, e.g., the copolymers of C₁₀₋₃₀ alkyl acrylates cross-linked with an allyl ether of sucrose or pentaerythritol with one or more monomers from the group of acrylic acid, methacrylic acid and their simple esters, preferably formed by C₁₋₄ alkanols, (INCI: acrylates/C₁₀₋₃₀ alkyl acrylate cross-polymer). The content of polymeric thickening agent is usually not more than 8 wt.%, preferably 0.1 to 7 wt.%, more preferably 0.5 to 6 wt.%, particularly preferably 1 to 5 wt.% and most preferably 1.5 to 4 wt.%, e.g., 2 to 2.5 wt.%, based on the total weight of the composition.

To stabilize the cleaning composition according to the invention, in particular at a high surfactant content, one or more dicarboxylic acids and/or their salts can be added, in particular to a composition of Na salts of adipic, succinic and glutaric acid, e.g., as is available under the trade name Sokalan^{®} DSC. The use here is advantageously in amounts of 0.1 to 8 wt.%, preferably 0.5 to 7 wt.%, more preferably 1.3 to 6 wt.% and particularly preferably 2 to 4 wt.%, based on the total weight of the composition. However, if the use thereof can be dispensed with, the composition according to the invention is preferably free of dicarboxylic acids (dicarboxylic acid salts).

In various embodiments, the cleaning composition comprises at least one chelating agent. Suitable chelating agents may include, but are not limited to, copper, iron, and/or manganese chelating agents, and mixtures thereof. In various embodiments, the cleaning composition comprises 0.1 to 15wt.% or even 3.0 to 10 wt.% chelating agent, based on the total weight of the composition.

In various embodiments, the cleaning composition comprises at least one deposition aid. Suitable deposition aids include, but are not limited to, polyethylene glycol, polypropylene glycol, polycarboxylate, soil release polymers such as polyterephthalic acid, clays such as kaolinite, montmorillonite, attapulgite, illite, bentonite, halloysite, and mixtures thereof.

In various embodiments, the cleaning composition comprises one or more bleach, bleach activator, and/or bleach catalyst. In various embodiments, the composition comprises inorganic and/or organic bleaching compound(s). Inorganic bleaches may include, but are not limited to, perhydrate salts (e.g., perborate, percarbonate, perphosphate, persulfate, and persilicate salts). In various embodiments, inorganic perhydrate salts are alkali metal salts. In various embodiments, inorganic perhydrate salts are included as the crystalline solid, without additional protection, although in various other embodiments, the salt is coated. Bleach activators are typically organic peracid precursors that enhance the bleaching action in the course of cleaning at temperatures of 60°C and below. Bleach activators suitable for use herein include compounds which, under perhydrolysis conditions, give aliphatic peroxy carboxylic acids having preferably from about 1 to about 10 carbon atoms, in particular from about 2 to about 4 carbon atoms, and/or optionally substituted perbenzoic acid. Bleach catalysts typically include, e.g., manganese triazacyclononane and related complexes, and cobalt, copper, manganese, and iron complexes.

In various embodiments, the cleaning composition comprises one or more catalytic metal complex. In various embodiments, a metal-containing bleach catalyst finds use. In various embodiments, the metal bleach catalyst comprises a catalyst system comprising a transition metal cation of defined bleach catalytic activity (e.g., copper, iron, titanium, ruthenium, tungsten, molybdenum, or manganese cations), an auxiliary metal cation having little or no bleach catalytic activity (e.g., zinc or aluminum cations), and a sequestrate having defined stability constants for the catalytic and auxiliary metal cations, particularly ethylene diamine tetraacetic acid, ethylene diamine tetra(methylene phosphonic acid) and water-soluble salts thereof are used. In various embodiments, the composition is catalyzed by means of a manganese compound. Such compounds and levels of use are well known in the art. In various embodiments, cobalt bleach catalysts find use in the compositions. Various cobalt bleach catalysts are known in the art and are readily prepared by known procedures.

In various embodiments, the cleaning composition includes all solid, powdered, liquid, gel or pasty administration forms of compositions according to the invention, which may optionally also consist of a plurality of phases and can be present in compressed or uncompressed form. The composition may be present as a flowable powder, in particular having a bulk density of from 300 to 1200 g/L, in particular from 500 to 900 g/L or from 600 to 850 g/L. The solid administration forms of the compositions also include extrudates, granules, tablets or pouches. Alternatively, the composition may also be in liquid, gel or pasty form, e.g., in the form of a non-aqueous liquid washing composition or a non-aqueous paste or in the form of an aqueous liquid washing composition or a water-containing paste. The composition may also be present as a one-component system. Such compositions consist of one phase. Alternatively, an agent may also consist of a plurality of phases. Such a composition is therefore divided into a plurality of components (multi-component system).

In various embodiments, the cleaning composition has a pH of 5.0 to 10.0, preferably pH 5.0 to 9.0, more preferably pH 5.5 to 9.0, even more preferably pH 5.5 to 8.5, as measured in 1 wt.% aqueous solution at 20°C.Techniques for controlling pH at recommended usage levels include the use of buffers, alkalis, acids, etc., and are well known to those skilled in the art.

In various embodiments, the cleaning compositions according to the invention may be utilized at a temperature of from 10 to 60°C, or 20 to 60°C, or 30 to 60°C, 40 to 60°C, from about 40 to 55°C, or all ranges within 10 to 60°C. In various embodiments, the detergent compositions according to the invention are used in "cold water washing" at temperatures of from 10 to 40°C, or from 20 to 30°C, from 15 to 25°C, from 15 to 35°C, or all ranges within 10 to 40°C.

Another aspect of the present invention relates to a method for cleaning of textiles, which is characterized in that in at least one method step, a cleaning composition according to the invention is used, in particular contacted with the fabric or textile. The textiles preferably are selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (Gossypium), or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.

In preferred embodiments, the textile is selected from the group consisting of cotton textiles, polyester textiles, viscose textiles, polyamide textiles, cotton-polyester-blend textiles, cotton-polyamide-blend textile, textiles comprising elastane, in particular preferably cotton-polyester blend textiles, cotton-polyamide-blend textile, viscose, and polyamide-elastane-blend textiles.

In various embodiments, the method described above is characterized in that the composition according to the invention is used at a temperature of from 0 to 100°C, preferably 0 to 80°C, more preferably 30 to 60°C, even more preferably 20 to 40°C and most preferably at 20°C, 30°C or 40°C.

These include both manual and mechanical methods, with mechanical methods being preferred. Methods for cleaning textiles are generally characterized by the fact that, in a plurality of method steps, various cleaning-active substances are applied to the material to be cleaned and washed off after the exposure time, or in that the material to be cleaned is otherwise treated with a washing agent or a solution or dilution of this agent. All conceivable washing or cleaning methods can be enhanced in at least one of the method steps by the use of a cleaning composition according to the invention, and therefore represent embodiments of the present invention.

Since enzymes naturally already have catalytic activity and also exhibit this in media which otherwise have no cleaning power, e.g., in a simple buffer, a single and/or the sole step of such a method can consist in at least one polyesterase, which is the only cleaning-active component, being brought into contact with the textile or fabric, preferably in a buffer solution or in water. This constitutes a further embodiment of this subject matter of the invention.

Alternative embodiments of this subject matter of the invention are also represented by methods for treating textile raw materials or for textile care, in which a composition according to the invention becomes active in at least one method step. Among these, methods for textile raw materials, fibers or textiles with synthetic constituents are preferred, and very particularly for those with polyester, polyamide, viscose or blends thereof, e.g., polyester-cotton blends or polyamide-cotton blends.

In another aspect, the present invention relates to use of a cleaning composition according to the invention for cleaning an item, and/or for reducing pilling effects and/or preventing pilling effects on an item, and/or for reducing graying effects and/or preventing graying effects on an item, and/or for increasing color vibrancy on an item, and/or for increasing anti-graying effect of the cleaning composition, and/or for increasing anti- and/or de-pilling effect of cleaning composition,
wherein the item is selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (Gossypium), or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.

In another aspect, the present invention relates to use of a cleaning composition according to the invention for cleaning an item,
wherein the item is selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (Gossypium), or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.

In another aspect, the present invention relates to use of a cleaning composition according to the invention for reducing pilling effects and/or preventing pilling effects on an item,
wherein the item is selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (Gossypium), or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.

In another aspect, the present invention relates to use of a cleaning composition according to the invention for reducing graying effects and/or preventing graying effects on an item,
wherein the item is selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (Gossypium), or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.

In another aspect, the present invention relates to use of a cleaning composition according to the invention for increasing color vibrancy on an item,
wherein the item is selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (Gossypium), or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.

In another aspect, the present invention relates to use of a cleaning composition according to the invention for increasing anti-graying effect of the cleaning composition, when applying the cleaning composition on an item,
wherein the item is selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (Gossypium), or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.

In another aspect, the present invention relates to use of a cleaning composition according to the invention for increasing anti- and/or de-pilling effect of cleaning composition, when applying the cleaning composition on an item,
wherein the item is selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (Gossypium), or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.

In preferred embodiments, the textile is selected from the group consisting of cotton textiles, polyester textiles, viscose textiles, polyamide textiles, cotton-polyester-blend textiles, cotton-polyamide-blend textile, textiles comprising elastane, in particular preferably cotton-polyester blend textiles, cotton-polyamide-blend textile, viscose, and polyamide-elastane-blend textiles.

All aspects, objects and embodiments described for the cleaning compositions according to the invention are also applicable to this subject matter of the invention relating to methods of use thereof as well as respective uses. Therefore, reference is expressly made at this point to the disclosure at the appropriate point with the note that this disclosure also applies to the above-described methods and uses according to the invention.

Other aspects and embodiments of the present compositions and methods will be apparent from the foregoing description and following examples. Various alternative embodiments beyond those described herein can be employed in practicing the invention without departing from the spirit and scope of the invention. Accordingly, the claims, and not the specific embodiments, as described herein, define the scope of the invention and as such methods and structures within the scope of the claims and their equivalents are covered thereby.

### EMBODIMENTS

1. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof; and
   (C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof.
2. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
   (C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof; and
   (D) at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition.
3. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
   (C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof; and
   (D) sodium benzoate, preferably in an amount of 0.01 to 1 wt.%, more preferably 0.05 to 0.5 wt.%, based on the total weight of the cleaning composition.
4. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
   (C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof; and
   (D) at least one further enzyme, preferably in an amount of 0.01 to 10 wt.%, more preferably 0.1 to 8 wt.%, particularly preferred 0.2 to 6 wt.%, based on active protein and based on the total weight of the cleaning composition, wherein said enzyme is selected from the group consisting of protease, amylase, lipase, mannanase, pectate lyase or mixtures thereof.
5. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
   (C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof; and
   (D) at least one performance polymer, preferably in an amount of 0.1 to 1.0 wt.%, more preferably 0.15 to 0.8 wt.%, particularly preferably 0.3 to 0.6 wt.%, based on total weight of the cleaning composition, wherein the performance polymer is selected from the group consisting of soil release polymer, dye transfer inhibitor, performance booster, performance booster for bleachable stains, anti-redeposition agents, dispersants, graying inhibitor, and mixtures thereof.
6. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
   (C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof;
   (D) at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition; and
   (E) sodium benzoate, preferably in an amount of 0.01 to 1 wt.%, more preferably 0.05 to 0.5 wt.%, based on the total weight of the cleaning composition.
7. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
   (C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof;
   (D) at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition; and
   (E) at least one further enzyme, preferably in an amount of 0.01 to 10 wt.%, more preferably 0.1 to 8 wt.%, particularly preferred 0.2 to 6 wt.%, based on active protein and based on the total weight of the cleaning composition.
8. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
   (C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof;
   (D) at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition; and
   (E) at least one performance polymer, preferably in an amount of 0.1 to 1.0 wt.%, more preferably 0.15 to 0.8 wt.%, particularly preferably 0.3 to 0.6 wt.%, based on total weight of the cleaning composition, wherein the performance polymer is selected from the group consisting of soil release polymer, dye transfer inhibitor, performance booster, performance booster for bleachable stains, anti-redeposition agents, dispersants, graying inhibitor, and mixtures thereof.
9. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
   (C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof;
   (D) at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition;
   (E) sodium benzoate, preferably in an amount of 0.01 to 1 wt.%, more preferably 0.05 to 0.5 wt.%, based on the total weight of the cleaning composition;
   (F) at least one further enzyme, preferably in an amount of 0.01 to 10 wt.%, more preferably 0.1 to 8 wt.%, particularly preferred 0.2 to 6 wt.%, based on active protein and based on the total weight of the cleaning composition, wherein said enzyme is selected from the group consisting of protease, amylase, lipase, mannanase, pectate lyase or mixtures thereof; and
   (G) at least one performance polymer, preferably in an amount of 0.1 to 1.0 wt.%, more preferably 0.15 to 0.8 wt.%, particularly preferably 0.3 to 0.6 wt.%, based on total weight of the cleaning composition, wherein the performance polymer is selected from the group consisting of soil release polymer, dye transfer inhibitor, performance booster, performance booster for bleachable stains, anti-redeposition agents, dispersants, graying inhibitor, and mixtures thereof.
10. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) a surfactant mixture comprising, wherein the surfactant mixture is selected from:
      - 5.6 wt.% anionic surfactants, 3.2 wt.% non-ionic surfactants, and 0.5 wt.% soap, wherein the composition comprises less than 3 wt.% LAS;
      - 6.4 wt.% anionic surfactants, and 3.2 wt.% non-ionic surfactants, wherein the composition is substantially free of LAS, preferably free of LAS;
      - 12.5% anionic surfactants, 5.5 wt.% non-ionic surfactants, and 3 wt.% fatty acids, wherein the composition comprises less than 6 wt.% LAS;
      - 9.5 wt.% alkyl benzol sulphonate, 3.5 wt.% alkyl ether sulphate, 7.4 wt.% ethoxylated fatty alcohol, and 1.1 wt.% fatty acids;
      - 5 to 13 wt.% anionic surfactants, 3 to 6 wt.% non-ionic surfactants, 0 to 1 wt.% soap, and 0 to 3 wt.% fatty acids, wherein the composition is substantially free of LAS;
      - 2 to 20 wt.% anionic surfactants, 1 to 10 wt.% non-ionic surfactants, 0 to 1 wt.% soap, and 0 to 5 wt.% fatty acids, wherein the cleaning composition comprises less than 10 wt.% LAS, preferably less than 6 wt.%, more preferably less than 3 wt.% LAS, particularly preferably being substantially free of LAS; and
      - 3 to 17 wt.% anionic surfactants, 3 to 8 wt.% non-ionic surfactants, 0 to 0.5 wt.% soap, and 0 to 3 wt.% fatty acids, wherein the cleaning composition comprises less than 10 wt.% LAS, preferably less than 6 wt.%, more preferably less than 3 wt.% LAS, particularly preferably being substantially free of LAS;
   (C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof;
   (D) at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition;
   (E) sodium benzoate, preferably in an amount of 0.01 to 1 wt.%, more preferably 0.05 to 0.5 wt.%, based on the total weight of the cleaning composition;
   (F) at least one further enzyme, preferably in an amount of 0.01 to 10 wt.%, more preferably 0.1 to 8 wt.%, particularly preferred 0.2 to 6 wt.%, based on active protein and based on the total weight of the cleaning composition, wherein said enzyme is selected from the group consisting of protease, amylase, lipase, mannanase, pectate lyase or mixtures thereof; and
   (G) at least one performance polymer, preferably in an amount of 0.1 to 1.0 wt.%, more preferably 0.15 to 0.8 wt.%, particularly preferably 0.3 to 0.6 wt.%, based on total weight of the cleaning composition, wherein the performance polymer is selected from the group consisting of soil release polymer, dye transfer inhibitor, performance booster, performance booster for bleachable stains, anti-redeposition agents, dispersants, graying inhibitor, and mixtures thereof.
11. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) a surfactant mixture comprising
      (i) 2 to 20 wt.%, preferably 3 to 17 wt.% anionic surfactants,
      (ii) 1 to 10 wt.%, preferably 3 to 8 wt.%, non-ionic surfactants,
      (iii) 0 to 1 wt.%, preferably 0 to 0.5 wt.%, soap, and
      (iv) 0 to 5 wt.%, preferably 0 to 3 wt.% fatty acids;
   (C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof;
   (D) at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition;
   (E) sodium benzoate, preferably in an amount of 0.01 to 1 wt.%, more preferably 0.05 to 0.5 wt.%, based on the total weight of the cleaning composition;
   (F) at least one further enzyme, preferably in an amount of 0.01 to 10 wt.%, more preferably 0.1 to 8 wt.%, particularly preferred 0.2 to 6 wt.%, based on active protein and based on the total weight of the cleaning composition, wherein said enzyme is selected from the group consisting of protease, amylase, lipase, mannanase, pectate lyase or mixtures thereof; and
   (G) at least one performance polymer, preferably in an amount of 0.1 to 1.0 wt.%, more preferably 0.15 to 0.8 wt.%, particularly preferably 0.3 to 0.6 wt.%, based on total weight of the cleaning composition, wherein the performance polymer is selected from the group consisting of soil release polymer, dye transfer inhibitor, performance booster, performance booster for bleachable stains, anti-redeposition agents, dispersants, graying inhibitor, and mixtures thereof.
12. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
   (C) a builder system, wherein said builder system is selected from:
      - 0.23 wt.% citric acid, 0 to 0.2 wt.% DTPMP, and 0 to 0.5 wt.% GLDA;
      - 2.5 wt.% citric acid, 0.5 wt.% DTPMP;
      - 2 to 2.5 wt.% citric acid, 0 to 0.7 wt.% HEDP, and 0 to 1.8 wt.% GLDA;
      - 2 to 2.5 wt.% citric acid, 0 to 0.4 wt.% DTPMP, and 0 to 1.8 wt.% GLDA;
      - 2 to 2.5 wt.% citric acid, 0 to 0.7 wt.% HEDP, and 0 to 0.5 wt.% GLDA;
      - 1.5 to 2.5 wt.% citric acid, 0 to 0.4 wt.% DTPMP, and 0 to 1.8 wt.% GLDA; and
      - 1.5 to 2.5 wt.% citric acid, 0 to 0.7 wt.% HEDP, and 0 to 0.5 wt.% GLDA;
   (D) at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition;
   (E) sodium benzoate, preferably in an amount of 0.01 to 1 wt.%, more preferably 0.05 to 0.5 wt.%, based on the total weight of the cleaning composition;
   (F) at least one further enzyme, preferably in an amount of 0.01 to 10 wt.%, more preferably 0.1 to 8 wt.%, particularly preferred 0.2 to 6 wt.%, based on active protein and based on the total weight of the cleaning composition, wherein said enzyme is selected from the group consisting of protease, amylase, lipase, mannanase, pectate lyase or mixtures thereof; and
   (G) at least one performance polymer, preferably in an amount of 0.1 to 1.0 wt.%, more preferably 0.15 to 0.8 wt.%, particularly preferably 0.3 to 0.6 wt.%, based on total weight of the cleaning composition, wherein the performance polymer is selected from the group consisting of soil release polymer, dye transfer inhibitor, performance booster, performance booster for bleachable stains, anti-redeposition agents, dispersants, graying inhibitor, and mixtures thereof.
13. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
   (C) a builder system comprising
      (i) 0 to 10 wt.%, preferably 1 to 4 wt.% citric acid and/or citrate, preferably alkali citrate,
      (ii) 0 to 40 wt.%, preferably 0 to 15 wt.%, more preferably 1 to 3 wt.%, alkali carbonate, preferably sodium carbonate,
      (iii) 0 to 20 wt.%, preferably 3 to 10 wt.% alkali silicate,
      (iv) 0 to 10 wt.%, preferably 0.5 to 2 wt.%, phosphonic acid and/or alkali phosphonate, particular preferably HEDP and/or DTPMP, and/or
      (v) 0 to 10 wt.%, preferably 0.5 to 3 wt.%, amino polycarboxylic acids, preferably MGDA and/or GLDA;
   (D) at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition;
   (E) sodium benzoate, preferably in an amount of 0.01 to 1 wt.%, more preferably 0.05 to 0.5 wt.%, based on the total weight of the cleaning composition;
   (F) at least one further enzyme, preferably in an amount of 0.01 to 10 wt.%, more preferably 0.1 to 8 wt.%, particularly preferred 0.2 to 6 wt.%, based on active protein and based on the total weight of the cleaning composition, wherein said enzyme is selected from the group consisting of protease, amylase, lipase, mannanase, pectate lyase or mixtures thereof; and
   (G) at least one performance polymer, preferably in an amount of 0.1 to 1.0 wt.%, more preferably 0.15 to 0.8 wt.%, particularly preferably 0.3 to 0.6 wt.%, based on total weight of the cleaning composition, wherein the performance polymer is selected from the group consisting of soil release polymer, dye transfer inhibitor, performance booster, performance booster for bleachable stains, anti-redeposition agents, dispersants, graying inhibitor, and mixtures thereof.
14. A cleaning composition, preferably liquid laundry detergent composition, comprising
   (A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
   (B) a surfactant mixture comprising
      (i) 2 to 20 wt.%, preferably 3 to 17 wt.% anionic surfactants,
      (ii) 1 to 10 wt.%, preferably 3 to 8 wt.%, non-ionic surfactants,
      (iii) 0 to 1 wt.%, preferably 0 to 0.5 wt.%, soap, and
      (iv) 0 to 5 wt.%, preferably 0 to 3 wt.% fatty acids;
   (C) a builder system comprising
      (i) 0 to 10 wt.%, preferably 1 to 4 wt.% citric acid and/or citrate, preferably alkali citrate,
      (ii) 0 to 40 wt.%, preferably 0 to 15 wt.%, more preferably 1 to 3 wt.%, alkali carbonate, preferably sodium carbonate,
      (iii) 0 to 20 wt.%, preferably 3 to 10 wt.% alkali silicate,
      (iv) 0 to 10 wt.%, preferably 0.5 to 2 wt.%, phosphonic acid and/or alkali phosphonate, particular preferably HEDP and/or DTPMP, and/or
      (v) 0 to 10 wt.%, preferably 0.5 to 3 wt.%, amino polycarboxylic acids, preferably MGDA and/or GLDA;
   (D) at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition;
   (E) sodium benzoate, preferably in an amount of 0.01 to 1 wt.%, more preferably 0.05 to 0.5 wt.%, based on the total weight of the cleaning composition;
   (F) at least one further enzyme, preferably in an amount of 0.01 to 10 wt.%, more preferably 0.1 to 8 wt.%, particularly preferred 0.2 to 6 wt.%, based on active protein and based on the total weight of the cleaning composition, wherein said enzyme is selected from the group consisting of protease, amylase, lipase, mannanase, pectate lyase or mixtures thereof; and
   (G) at least one performance polymer, preferably in an amount of 0.1 to 1.0 wt.%, more preferably 0.15 to 0.8 wt.%, particularly preferably 0.3 to 0.6 wt.%, based on total weight of the cleaning composition, wherein the performance polymer is selected from the group consisting of soil release polymer, dye transfer inhibitor, performance booster, performance booster for bleachable stains, anti-redeposition agents, dispersants, graying inhibitor, and mixtures thereof.
15. The cleaning composition of any of points 1 to 14, wherein said composition has a pH of 5.0 to 10.0, preferably 5.0 to 9.0, more preferably 5.5 to 9.0, even more preferably 5.5 to 8.5, as measured in 1 wt.% aqueous solution at 20°C.
16. The cleaning composition of any of points 1 to 15, wherein said composition comprises less than 10 wt.% LAS, preferably less than 6 wt.%, more preferably less than 3 wt.%, even more preferably being substantially free of LAS, particularly preferably the composition being free of LAS.
17. The cleaning composition of any of points 1 to 16, wherein said composition is substantially free of phosphonates, preferably being free of phosphonates, in particular free of HEDP and/or DTPMP.
18. The cleaning composition of any of points 1 to 17, wherein said composition is substantially free of boron-containing components, preferably comprising less than 1 wt.% boron-containing components, more preferably less than 0.5 wt.%, even more preferably being free of boron-containing components.
19. The cleaning composition of any of points 1 to 18, wherein said composition is present in solid or liquid, preferably liquid, form; and/or it is in unit dose, in particular pouch or caps, more preferably liquid washing compositions, particularly preferably in unit dose form.
20. The cleaning composition of any of points 1 to 19, wherein the polyesterase comprises an amino acid sequence having at least 90% and increasingly preferably 91%, 92%, 93% or 94% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.
21. The cleaning composition of any of points 1 to 20, wherein the polyesterase comprises an amino acid sequence having at least 90% and increasingly preferably 91%, 92%, 93% or 94% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.
22. The cleaning composition of any of points 1 to 21, wherein the polyesterase comprises an amino acid sequence having at least 90% and increasingly preferably 91%, 92%, 93% or 94% identity to the full length amino acid sequence of SEQ ID NO:1, comprising the substitutions T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A/E, F207L, F207T, V210I, Q227H, A236P, S244E, E254Q, and R256K, where the positions are numbered by reference to the amino acid sequence of SEQ ID NO:1, and having polyesterase activity.
23. The cleaning composition of any of points 1 to 22, wherein the polyesterase comprises an amino acid sequence having at least 90% an increasingly preferably 91%, 92%, 93% or 94% identity to the full length amino acid sequence of SEQ ID NO:1 and comprises a combination of mutations selected from the group consisting of R40T-T64V-T117L-G175E-T177N-F180P-Y182A-R190L-S205G-F207L-S212D-F226L-Y239I-L249P-S252I-L258F, R40T-G61D-T64V-S70E-T117L-T177N-I178L-F180P-Y182A-R190L-S205G-F207T-S212D-F226L-Q227H-A236P-Y239I-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-L258F, R40A-T64V-S70E-T117L-T177N-I178L-F180P-Y182A-R190L-S205G-F207T-S212D-F226L-A236P-Y239I-L249P-S252I-E254Q-L258F, R40T-T64V-S70E-T117L-Q161H-T177N-I178L-F180P-Y182A-R190L-S205G-F207T-S212D-F226L-A236P-Y239I-L249P-S252I-E254Q-L258F, R40T-T64V-S70E-T117L-G175AT177N-I178L-F180P-Y182A-R190L-S205G-F207T-S212D-F226L-A236P-Y239I-L249P-S252I-E254Q-L258F, R40T-T64V-S70E-T117L-T177N-I178L-F180P-Y182A-R190L-S205G-F207T-V210I-S212D-F226L-A236P-Y239I-L249P-S252I-E254Q-L258F, R40T-T64V-S70E-T117L-T177N-I178L-F180P-Y182A-R190L-S205G-F207T-S212D-F226L-A236P-Y239I-S244E-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-R256K-L258F, V14S-R40A-G59Y-G61D-T64V-A66D-S70E-T117L-Q161H-T177R-I178L-F180P-Y182A-R190L-S205G-F207T-V210I-S212D-F226L-A236P-Y239I-L249P-S252I-E254Q-R256K-L258F, V14S-R40A-G59Y-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, R40T-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, and V14S-R40A-G59Y-G61D-T64V-A66D-S70E-T117L-Q161H-G175A-T177R-I178L-F180P-Y182A-R190L-S205G-F207T-V210I-S212D-F226L-A236P-Y239I-L249P-S252I-E254Q-R256K-L258F, where the positions are numbered by reference to the amino acid sequence of SEQ ID NO:1, and having polyesterase activity.
24. The cleaning composition of any of points 1 to 23, wherein the polyesterase comprises an amino acid sequence having a combination of mutations selected from the group consisting of R40T-T64V-T117L-G175E-T177N-F180P-Y182A-R190L-S205G-F207L-S212D-F226L-Y239I-L249P-S252I-L258F, R40T-G61D-T64V-S70E-T117L-T177N-I178L-F180P-Y182A-R190L-S205G-F207T-S212D-F226L-Q227H-A236P-Y239I-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-L258F, R40A-T64V-S70E-T117L-T177N-I178L-F180P-Y182A-R190L-S205G-F207T-S212D-F226L-A236P-Y239I-L249P-S252I-E254Q-L258F, R40T-T64V-S70E-T117L-Q161H-T177N-I178L-F180P-Y182A-R190L-S205G-F207T-S212D-F226L-A236P-Y239I-L249P-S252I-E254Q-L258F, R40T-T64V-S70E-T117L-G175A-T177N-I178L-F180P-Y182A-R190L-S205G-F207T-S212D-F226L-A236P-Y239I-L249P-S252I-E254Q-L258F, R40T-T64V-S70E-T117L-T177N-I178L-F180P-Y182A-R190L-S205G-F207T-V210I-S212D-F226L-A236P-Y239I-L249P-S252I-E254Q-L258F, R40T-T64V-S70E-T117L-T177N-I178L-F180P-Y182A-R190L-S205G-F207T-S212D-F226L-A236P-Y239I-S244E-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-R256K-L258F, V14S-R40A-G59Y-G61D-T64V-A66D-S70E-T117L-Q161H-T177R-I178L-F180P-Y182A-R190L-S205G-F207T-V210I-S212D-F226L-A236P-Y239I-L249P-S252I-E254Q-R256K-L258F, V14S-R40A-G59Y-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, R40T-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, and V14S-R40A-G59Y-G61D-T64V-A66D-S70E-T117L-Q161H-G175A-T177R-I178L-F180P-Y182A-R190L-S205G-F207T-V210I-S212D-F226L-A236P-Y239I-L249P-S252I-E254Q-R256K-L258F, where the positions are numbered by reference to the amino acid sequence of SEQ ID NO:1 and where the sequence besides said combination of mutations is identical to SEQ ID NO:1, and having polyesterase activity.
25. Use of a cleaning composition of any of points 1 to 24 for cleaning an item, and/or for reducing pilling effects and/or preventing pilling effects on an item, and/or for reducing graying effects and/or preventing graying effects on an item, and/or for increasing color vibrancy on an item, and/or for increasing anti-graying effect of the cleaning composition, and/or for increasing anti- and/or de-pilling effect of cleaning composition, preferably in a temperature range from about 20°C to about 60°C, more preferably 20°C to 40°C, particularly preferably about 20°C, 30°C or 40°C, wherein the item is selected from the group consisting of:
   (i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
   (ii) a textile or fabric comprising or consisting of cotton (Gossypium), or
   (iii) a textile or fabric comprising or consisting of polyamide, and wherein polyamide is preferably selected from the group consisting of Polyamide 6 and Polyamide 6.6, or
   (iv) a textile or fabric comprising or consisting of regenerated cellulose fibers like Viscose, Modal, Cupro, Lyocell.
26. Use of a cleaning composition of any of points 1 to 24 for cleaning an item, preferably in a temperature range from about 20°C to about 60°C, more preferably 20°C to 40°C, particularly preferably about 20°C, 30°C or 40°C, wherein the item is selected from the group consisting of:
   (i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
   (ii) a textile or fabric comprising or consisting of cotton (Gossypium), or
   (iii) a textile or fabric comprising or consisting of polyamide, and wherein polyamide is preferably selected from the group consisting of Polyamide 6 and Polyamide 6.6, or
   (iv) a textile or fabric comprising or consisting of regenerated cellulose fibers like Viscose, Modal, Cupro, Lyocell.
27. Use of a cleaning composition of any of points 1 to 24 for reducing pilling effects and/or preventing pilling effects on an item, preferably in a temperature range from about 20°C to about 60°C, more preferably 20°C to 40°C, particularly preferably about 20°C, 30°C or 40°C, wherein the item is selected from the group consisting of:
   (i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
   (ii) a textile or fabric comprising or consisting of cotton (Gossypium), or
   (iii) a textile or fabric comprising or consisting of polyamide, and wherein polyamide is preferably selected from the group consisting of Polyamide 6 and Polyamide 6.6, or
   (iv) a textile or fabric comprising or consisting of regenerated cellulose fibers like Viscose, Modal, Cupro, Lyocell.
28. Use of a cleaning composition of any of points 1 to 24 for for reducing graying effects and/or preventing graying effects on an item, preferably in a temperature range from about 20°C to about 60°C, more preferably 20°C to 40°C, particularly preferably about 20°C, 30°C or 40°C, wherein the item is selected from the group consisting of:
   (i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
   (ii) a textile or fabric comprising or consisting of cotton (Gossypium), or
   (iii) a textile or fabric comprising or consisting of polyamide, and wherein polyamide is preferably selected from the group consisting of Polyamide 6 and Polyamide 6.6, or
   (iv) a textile or fabric comprising or consisting of regenerated cellulose fibers like Viscose, Modal, Cupro, Lyocell.
29. Use of a cleaning composition of any of points 1 to 24 for increasing color vibrancy on an item, preferably in a temperature range from about 20°C to about 60°C, more preferably 20°C to 40°C, particularly preferably about 20°C, 30°C or 40°C, wherein the item is selected from the group consisting of:
   (i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
   (ii) a textile or fabric comprising or consisting of cotton (Gossypium), or
   (iii) a textile or fabric comprising or consisting of polyamide, and wherein polyamide is preferably selected from the group consisting of Polyamide 6 and Polyamide 6.6, or
   (iv) a textile or fabric comprising or consisting of regenerated cellulose fibers like Viscose, Modal, Cupro, Lyocell.
30. Use of a cleaning composition of any of points 1 to 24 for increasing anti-graying effect of the cleaning composition, when applying the cleaning composition on an item, preferably in a temperature range from about 20°C to about 60°C, more preferably 20°C to 40°C, particularly preferably about 20°C, 30°C or 40°C, wherein the item is selected from the group consisting of:
   (i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
   (ii) a textile or fabric comprising or consisting of cotton (Gossypium), or
   (iii) a textile or fabric comprising or consisting of polyamide, and wherein polyamide is preferably selected from the group consisting of Polyamide 6 and Polyamide 6.6, or
   (iv) a textile or fabric comprising or consisting of regenerated cellulose fibers like Viscose, Modal, Cupro, Lyocell.
31. Use of a cleaning composition of any of points 1 to 24 for increasing anti- and/or de-pilling effect of cleaning composition, when applying the cleaning composition on an item, preferably in a temperature range from about 20°C to about 60°C, more preferably 20°C to 40°C, particularly preferably about 20°C, 30°C or 40°C, wherein the item is selected from the group consisting of:
   (i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
   (ii) a textile or fabric comprising or consisting of cotton (Gossypium), or
   (iii) a textile or fabric comprising or consisting of polyamide, and wherein polyamide is preferably selected from the group consisting of Polyamide 6 and Polyamide 6.6, or
   (iv) a textile or fabric comprising or consisting of regenerated cellulose fibers like Viscose, Modal, Cupro, Lyocell.

### EXAMPLES

### Example 1: Compositions according to the invention

**Table 1: Liquid laundry detergent (Unit dose)**

| | **Wt.% active substance (raw material)** | **Wt.% active substance in formula** | |
|---|---|---|---|
| | | **A1** | **A2** |
| Water demin. | 100 | Ad 100 | Ad 100 |
| Boric acid | 100 | 0.9 | 0 |
| Citric acid | 100 | 2.5 | 2.5 |
| Glycerol | 99.5 | 3.0 | 3.0 |
| FAEOS | 70 | 7.0 | 7.0 |
| FAEO | 100 | 5.5 | 5.5 |
| LAS | 96 | 5.5 | 5.5 |
| NaOH | 50 | 3.0 | 3.0 |
| Fatty acid | 30 | 3.0 | 3.0 |
| Ethanol | 93 | 1.5 | 1.5 |
| DTPMP | 40 | 0.5 | 0.5 |
| Misc. (Parfum, Optical Brightener, Dye, enzymes*) | t.q. | minors | minors |
| pH | | 8-8.4 | 8-8.4 |

| | | | |
|---|---|---|---|
| * other then polyesterase and cellulase | | | |

**Table 2a: Liquid laundry detergent (Light Duty Detergent)**

| | **Wt.% active substance (raw material)** | **Wt.% active substance in formula** | | | | | | | | |
|---|---|---|---|---|---|---|---|---|---|---|
| | | **B1** | **B2** | **B3** | **B4** | **B5** | **B6** | **B7** | **B8** | **B9** |
| Water demin. | 100 | Ad 100 | Ad 100 | Ad 100 | Ad 100 | Ad 100 | Ad 100 | Ad 100 | Ad 100 | Ad 100 |
| Boric acid | 100 | 0.5 | 0.3 | 0 | 0.5 | 0.3 | 0 | 0.5 | 0.3 | 0 |
| Citric acid | 100 | 0.23 | 0.23 | 0.23 | 0.23 | 0.23 | 0.23 | 0.23 | 0.23 | 0.23 |
| Glycerol | 99.5 | 0.5 | 0.5 | 0.5 | 0.5 | 0.5 | 0.5 | 0.5 | 0.5 | 0.5 |
| FAEOS | 70 | 3.0 | 3.0 | 3.0 | 3.0 | 3.0 | 3.0 | 3.0 | 3.0 | 3.0 |
| FAEO | 100 | 3.2 | 3.2 | 3.2 | 3.2 | 3.2 | 3.2 | 3.2 | 3.2 | 3.2 |
| LAS | 96 | 2.6 | 2.6 | 2.6 | 2.6 | 2.6 | 2.6 | 2.6 | 2.6 | 2.6 |
| NaOH | 50 | 0.7 | 0.7 | 0.7 | 0.7 | 0.7 | 0.7 | 0.7 | 0.7 | 0.7 |
| Soap | 30 | 0.5 | 0.5 | 0.5 | 0.5 | 0.5 | 0.5 | 0.5 | 0.5 | 0.5 |
| Preserving agent | t.q. | 0.05 | 0.05 | 0.05 | 0.05 | 0.05 | 0.05 | 0 | 0 | 0 |
| Na Benzoate | t.q. | 0 | 0 | 0 | 0 | 0 | 0 | 0.5 | 0.5 | 0.5 |
| DTPMP | 40 | 0.2 | 0.2 | 0.2 | 0.2 | 0.2 | 0.2 | 0.2 | 0.2 | 0.2 |
| GLDA | 47 | 0 | 0 | 0 | 0 | 0 | 0 | 0 | 0 | 0 |
| Performance polymers | t.q. | 0 | 0 | 0 | 0.15 | 0.15 | 0.15 | 0 | 0 | 0 |
| Misc. (Parfum, Optical Brightener, Dye, enzymes*) | t.q. | minors | minors | minors | minors | minors | minors | minors | minors | minors |
| pH | | 8.4 | 8.4 | 8.4 | 8.4 | 8.4 | 8.4 | 5.5 | 5.5 | 5.5 |

| | | | | | | | | | | |
|---|---|---|---|---|---|---|---|---|---|---|
| * other then polyesterase and cellulase | | | | | | | | | | |

**Table 2b: Liquid laundry detergent (Light Duty Detergent)**

| | **Wt.% active substance (raw material)** | **Wt.% active substance in formula** | | | | | | | |
|---|---|---|---|---|---|---|---|---|---|
| | | **C1** | **C2** | **C3** | **C4** | **C5** | **C6** | **C7** | **C8** |
| Water demin. | 100 | Ad 100 | Ad 100 | Ad 100 | Ad 100 | Ad 100 | Ad 100 | Ad 100 | Ad 100 |
| Boric acid | 100 | 0.5 | 0.3 | 0 | 0.5 | 0.3 | 0 | 0 | 0 |
| Citric acid | 100 | 0.23 | 0.23 | 0.23 | 0.23 | 0.23 | 0.23 | 0.23 | 0.23 |
| Glycerol | 99.5 | 0.5 | 0.5 | 0.5 | 0.5 | 0.5 | 0.5 | 0.5 | 0.5 |
| FAEOS | 70 | 3.0 | 3.0 | 3.0 | 3.0 | 3.0 | 3.0 | 6.4 | 6.4 |
| FAEO | 100 | 3.2 | 3.2 | 3.2 | 3.2 | 3.2 | 3.2 | 3.2 | 3.2 |
| LAS | 96 | 2.6 | 2.6 | 2.6 | 2.6 | 2.6 | 2.6 | 0 | 0 |
| NaOH | 50 | 0.7 | 0.7 | 0.7 | 0.7 | 0.7 | 0.7 | 0.7 | 0.7 |
| Soap | 30 | 0.5 | 0.5 | 0.5 | 0.5 | 0.5 | 0.5 | 0 | 0 |
| Preserving agent | t.q. | 0 | 0 | 0 | 0.05 | 0.05 | 0.05 | 0 | 0 |
| Na Benzoate | t.q. | 0.5 | 0.5 | 0.5 | 0 | 0 | 0 | 0.3 | 0.3 |
| DTPMP | 40 | 0 | 0 | 0.2 | 0 | 0 | 0 | 0.2 | 0 |
| GLDA | 47 | 0.5 | 0.5 | 0 | 0.5 | 0.5 | 0.5 | 0 | 0.5 |
| Performance polymers | t.q. | 0.15 | 0.15 | 0.15 | 0.15 | 0.15 | 0.15 | 0.15 | 0.15 |
| Misc. (Parfum, Optical Brightener, Dye, enzymes*) | t.q. | minors | minors | minors | minors | minors | minors | minors | minors |
| pH | | 5.5 | 5.5 | 5.5 | 8.4 | 8.4 | 8.4 | 5.5 | 5.5 |

| | | | | | | | | | |
|---|---|---|---|---|---|---|---|---|---|
| * other then polyesterase and cellulase | | | | | | | | | |

**Table 3: Liquid laundry detergent (Heavy Duty Detergent)**

| | **Wt.% active substance (raw material)** | **Wt.% active substance in formula** | | | | | | | | |
|---|---|---|---|---|---|---|---|---|---|---|
| | | **D1** | **D2** | **D3** | **D4** | **D5** | **D6** | **D7** | **D8** | **D9** |
| Water demin. | 100 | Ad 100 | Ad 100 | Ad 100 | Ad 100 | Ad 100 | Ad 100 | Ad 100 | Ad 100 | Ad 100 |
| Boric acid | 100 | 0.6 | 0.3 | 0 | 0.6 | 0.3 | 0 | 0.6 | 0.3 | 0 |
| Citric acid | 100 | 2.0 | 2.0 | 2.0 | 2.0 | 2.0 | 2.0 | 2.0 | 2.0 | 2.0 |
| Glycerol | 99.5 | 1.2 | 1.2 | 1.2 | 1.2 | 1.2 | 1.2 | 1.2 | 1.2 | 1.2 |
| Alkyl ether sulfate | | 3.5 | 3.5 | 3.5 | 3.5 | 3.5 | 3.5 | 3.5 | 3.5 | 3.5 |
| FAEO | 100 | 7.4 | 7.4 | 7.4 | 7.4 | 7.4 | 7.4 | 7.4 | 7.4 | 7.4 |
| LAS | 96 | 9.5 | 9.5 | 9.5 | 9.5 | 9.5 | 9.5 | 9.5 | 9.5 | 9.5 |
| NaOH | 50 | 0.5 | 0.5 | 0.5 | 0.5 | 0.5 | 0.5 | 0.5 | 0.5 | 0.5 |
| Fatty acid | 30 | 1.1 | 1.1 | 1.1 | 1.1 | 1.1 | 1.1 | 1.1 | 1.1 | 1.1 |
| MEA | | 3.8 | 3.8 | 3.8 | 3.8 | 3.8 | 3.8 | 3.8 | 3.8 | 3.8 |
| 1,2-Propandiol | | 6.2 | 6.2 | 6.2 | 6.2 | 6.2 | 6.2 | 6.2 | 6.2 | 6.2 |
| Preserving agent | t.q. | | | | | | | | | |
| Na Benzoate | t.q. | | | | | | | | | |
| HEDP | | 0.7 | 0.7 | 0.7 | 0.7 | 0.7 | 0.7 | 0.7 | 0.7 | 0.7 |
| GLDA | 47 | 0 | 0 | 0 | 0.5 | 0.5 | 0.5 | 1.8 | 1.8 | 1.8 |
| Performance polymers | t.q. | 0.4 | 0.4 | 0.4 | 0.4 | 0.4 | 0.4 | 0.4 | 0.4 | 0.4 |
| Misc. (Parfum, Optical Brightener, Dye, enzymes*) | t.q. | minors | minors | minors | minors | minors | minors | minors | minors | minors |
| pH | | 8.2-8.4 | 8.2-8.4 | 8.2-8.4 | 8.2-8.4 | 8.2-8.4 | 8.2-8.4 | 8.2-8.4 | 8.2-8.4 | 8.2-8.4 |

| | | | | | | | | | | |
|---|---|---|---|---|---|---|---|---|---|---|
| * other then polyesterase and cellulase | | | | | | | | | | |

### Example 2: Wash test to determine the antipillinq performance of enzymes

20 identical tests are conducted in succession in a commercially available washing machine. Various polyesters, some of which are new and some of which are pre-pilled, are used as textiles to be assessed. After each washing cycle, the complete laundry is dried on the line. After the 20 tests, the pill reduction of the pre-pilled fabrics and the pill formation of the new fabrics are assessed visually.

Washing conditions: Water with 16°dH, 2.5 kg clean ballast load, 40°C, normal program using Formulas described in Tables 1 to 3, 50 ml/Job. 7.5 mg/Job polyesterase (active enzyme), 0.1 mg/Job cellulase (active enzyme).

**Table 4: Results**

| Formula | Anti-pilling performance^{#} on new textiles | De-pilling performance^{#} on pre-pilled textiles |
|---|---|---|
| B2 (w/o polyesterase) | 2.3 | 1.6 |
| B3 (+ polyesterase) | 2.9 | 1.9 |
| C2 (+ polyesterase) | 3.3 | 2.1 |
| C3 (+ polyesterase) | 3.5 | 2.4 |
| C6 (+ polyesterase) | 3.3 | 1.8 |
| C7 (+ polyesterase) | 3.9 | 2.9 |
| C8 (+ polyesterase) | 3.6 | 2.1 |

| | | |
|---|---|---|
| * visual scale 1-5, where 1 = heavily pilled and 5 = no pilling; Δ ≥ 0.5 being considered significant | | |

In Table 4, anti- and/or de-pilling performance of inventive cleaning compositions is shown.

## Claims

1. A cleaning composition, preferably liquid laundry detergent composition, comprising
(A) at least one polyesterase, preferably in an amount of 0.00001 to 1 wt.%, more preferably 0.0001 to 0.5 wt.%, particularly preferably 0.001 to 0.1 wt.%, based on active protein and based on total weight of cleaning composition, wherein said at least one polyesterase comprises an amino acid sequence having at least 70% and increasingly preferably 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% or 99% identity to the full length amino acid sequence of SEQ ID NO:1, comprising the substitutions T64V-T117L-T177N-I178L-F180P-Y182A-R190L-S205G-S212D-F226L-Y239I-L249P-S252I-L258F or T64V-T117L-T177R-I178L-F180P-Y182A-R190L-S205G-S212D-F226L-Y239I-L249P-S252I-L258F, further comprising at least one additional substitution selected from the group consisting of V14S, R40A, R40T, G59Y, G61D, A66D, S70E, Q161H, G175A, G175E, F207L, F207T, V210I, Q227H, A236P, S244E, E254Q, and R256K, the positions being numbered by reference to the amino acid sequence of SEQ ID NO:1, and having polyesterase activity;
(B) at least one surfactant, preferably in an amount of 3 to 35 wt.%, more preferably 5 to 30 wt.%, based on the total weight of the cleaning composition, wherein said surfactant is selected from the group consisting of anionic surfactants, non-ionic surfactants, cationic surfactants, zwitterionic surfactants, amphoteric surfactants and mixtures thereof;
(C) a builder system comprising at least one builder, preferably in an amount of 0.5 to 50 wt.%, more preferably 0.5 to 20 wt.%, particularly preferably 0.5 to 10 wt.%, based on the total weight of the cleaning composition, wherein said builder is selected from the group consisting of polycarboxylic acids such as citric acid, adipic acid, succinic acid, glutaric acid, malic acid, tartaric acid, maleic acid, fumaric acid, sugar acids and carboxy methyl inulines, or salts thereof, monomeric and polymeric amino polycarboxylic acids such as glycine diacetic acid, methyl glycine diacetic acid (MGDA), glutamic acid diacetic acid (GLDA), nitrile triacetic acid, imino disuccinate such as ethylene diamine-N,N'-disuccinic acid and hydroxy imino disuccinates, ethylene diamine tetraacetic acid and polyaspartic acid, or salts thereof, polyphosphonic acids such as amino tris(methylene phosphonic acid), ethylene diamine tetrakis(methylene phosphonic acid), lysine tetra(methylene phosphonic acid), diethylene triamine penta(methylene phosphonic acid) (DTPMP) and 1-hydroxyethane-1,1-diphosphonic acid (HEDP), or salts thereof, polymeric hydroxy compounds such as dextrin, and mixtures thereof;
(D) optionally, at least one cellulase, preferably in an amount of 0.00001 to 1 wt.%, more preferably 0.0001 to 0.5 wt.%, particularly preferably 0.001 to 0.1 wt.%, based on active protein and based on the total weight of the cleaning composition;
(E) optionally, sodium benzoate, preferably in an amount of 0.01 to 1 wt.%, more preferably 0.05 to 0.5 wt.%, based on the total weight of the cleaning composition;
(F) optionally, at least one further enzyme, preferably in an amount of 0.01 to 10 wt.%, more preferably 0.1 to 8 wt.%, particularly preferred 0.2 to 6 wt.%, based on active protein and based on the total weight of the cleaning composition, wherein said enzyme is selected from the group consisting of protease, amylase, lipase, mannanase, pectate lyase or mixtures thereof;
(G) optionally, at least one performance polymer, preferably in an amount of 0.1 to 1.0 wt.%, more preferably 0.15 to 0.8 wt.%, particularly preferably 0.3 to 0.6 wt.%, based on total weight of the cleaning composition, wherein the performance polymer is selected from the group consisting of soil release polymer, dye transfer inhibitor, performance booster, performance booster for bleachable stains, anti-redeposition agents, dispersants, graying inhibitor, and mixtures thereof.

2. The cleaning composition of claim 1, wherein the polyesterase comprises a combination of substitutions selected from the group consisting of R40T-T64V-T117L-G175E-T177N-F180P-Y182A-R190L-S205G-F207L-S212D-F226L-Y239I-L249P-S252I-L258F, R40T-G61D-T64V-S70E-T117L-T177N-I178L-F180P-Y182A-R190L-S205G-F207T-S212D-F226L-Q227H-A236P-Y239I-L249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-L258F, R40A-T64V-S70E-T117L-T177N-I178L-F180P-Y182A-R190L-S205G-F207T-S212D-F226L-A236P-Y239I-L249P-S252I-E254Q-L258F, R40T-T64V-S70E-T117L-Q161H-T177N-I178L-F180P-Y182A-R190L-S205G-F207T-S212D-F226L-A236P-Y239I-L249P-S252I-E254Q-L258F, R40T-T64V-S70E-T117L-G175A-T177N-I178L-F180P-Y182A-R190L-S205G-F207T-S212D-F226L-A236P-Y239I-L249P-S252I-E254Q-L258F, R40T-T64V-S70E-T117L-T177N-I178L-F180P-Y182A-R190L-S205G-F207T-V210I-S212D-F226L-A236P-Y239I-L249P-S252I-E254Q-L258F, R40T-T64V-S70E-T117L-T177N-I178L-F180P-Y182A-R190L-S205G-F207T-S212D-F226L-A236P-Y239I-S244EL249P-S252I-E254Q-L258F, R40T-T64V-S70E-T117L-T177N-I178L-F180P-Y182A-R190L-S205G-F207T-S212D-F226L-A236P-Y239I-L249P-S252I-E254Q-R256K-L258F, V14S-R40A-G59Y-G61D-T64V-A66D-S70E-T117L-Q161H-T177R-I178L-F180P-Y182A-R190L-S205G-F207T-V210I-S212D-F226L-A236P-Y239I-L249P-S252I-E254Q-R256K-L258F, V14S-R40A-G59Y-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, R40T-G61D-T64V-S70E-T117L-Q161H-T177R-I178L-F180P-Y182A-R190L-S205G-F207T-V210I-S212D-F226L-A236P-Y239I-L249P-S252I-E254Q-R256K-L258F, and V14S-R40A-G59Y-G61D-T64V-A66D-S70E-T117L-Q161H-G175A-T177R-I178L-F180P-Y182A-R190L-S205G-F207T-V210I-S212D-F226L-A236P-Y239I-L249P-S252I-E254Q-R256K-L258F, wherein the positions are numbered by reference to the amino acid sequence of SEQ ID NO:1.

3. The cleaning composition of any of the preceding claims, wherein the polyesterase has polyesterase activity, in particular hydrolytic activity on a polyester selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof.

4. The cleaning composition of any of the preceding claims, wherein said composition has a pH of 5.0 to 10.0, preferably 5.0 to 9.0, more preferably 5.5 to 9.0, even more preferably 5.5 to 8.5, as measured in 1 wt.% aqueous solution at 20°C.

5. The cleaning composition of any of the preceding claims, wherein the composition comprises
(i) 2 to 20 wt.%, preferably 3 to 17 wt.% anionic surfactants,
(ii) 1 to 10 wt.%, preferably 3 to 8 wt.%, non-ionic surfactants,
(iii) 0 to 1 wt.%, preferably 0 to 0.5 wt.%, soap, and
(iv) 0 to 5 wt.%, preferably 0 to 3 wt.% fatty acids.

6. The cleaning composition of any of the preceding claims, wherein said composition comprises less than 10 wt.% LAS, preferably less than 6 wt.%, more preferably less than 3 wt.%, even more preferably being substantially free of LAS, particularly preferably the composition being free of LAS.

7. The cleaning composition of any of the preceding claims, wherein said builder system comprises
(i) 0 to 10 wt.%, preferably 1 to 4 wt.% citric acid and/or citrate, preferably alkali citrate,
(ii) 0 to 40 wt.%, preferably 0 to 15 wt.%, more preferably 1 to 3 wt.%, alkali carbonate, preferably sodium carbonate,
(iii) 0 to 20 wt.%, preferably 3 to 10 wt.% alkali silicate,
(iv) 0 to 10 wt.%, preferably 0.5 to 2 wt.%, phosphonic acid and/or alkali phosphonate, particular preferably HEDP and/or DTPMP, and/or
(v) 0 to 10 wt.%, preferably 0.5 to 3 wt.%, amino polycarboxylic acids, preferably MGDA and/or GLDA.

8. The cleaning composition of any of the preceding claims, wherein said composition is substantially free of phosphonates, preferably being free of phosphonates, in particular free of HEDP and/or DTPMP.

9. The cleaning composition of any of the preceding claims, wherein said composition is substantially free of boron-containing components, preferably comprising less than 1 wt.% boron-containing components, more preferably less than 0.5 wt.%, even more preferably being free of boron-containing components.

10. The cleaning composition of any of the preceding claims, wherein said composition is present in solid or liquid, preferably liquid, form; and/or it is in unit dose, in particular pouch or caps, more preferably liquid washing compositions, particularly preferably in unit dose form.

11. A method of cleaning an item comprising:
(a) providing a cleaning composition according to any of claims 1 to 10; and
(b) washing the item with the composition,
wherein the item is selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (Gossypium), or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.

12. A method of cleaning according to claim 11, wherein the textile is selected from the group consisting of cotton textiles, polyester textiles, viscose textiles, polyamide textiles, cotton-polyester-blend textiles, cotton-polyamide-blend textile, textiles comprising elastane, in particular preferably cotton-polyester blend textiles, cotton-polyamide-blend textile, viscose, and polyamide-elastane-blend textiles.

13. Method according to claim 11 or 12, wherein the method is carried out in a temperature range from about 20°C to about 60°C, more preferably 20°C to 40°C, particularly preferably about 20°C, 30°C or 40°C.

14. Use of a cleaning composition of any one of claims 1 to 10 for cleaning an item, and/or for reducing pilling effects and/or preventing pilling effects on an item, and/or for reducing graying effects and/or preventing graying effects on an item, and/or for increasing color vibrancy on an item, and/or for increasing anti-graying effect of the cleaning composition, and/or for increasing anti- and/or de-pilling effect of cleaning composition, preferably in a temperature range from about 20°C to about 60°C, more preferably 20°C to 40°C, particularly preferably about 20°C, 30°C or 40°C, wherein the item is selected from the group consisting of:
(i) a textile or fabric comprising or consisting of polyester, and wherein the polyester is preferably selected from the group consisting of polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), polyethylene naphthalate (PEN), polyester polyurethane, polyethylene adipate) (PEA), and combinations thereof, more preferably selected from the group consisting of polyethylene terephthalate (PET), polytrimethylene terephthalate (PTT), polybutylene terephthalate (PBT), and combinations thereof, or
(ii) a textile or fabric comprising or consisting of cotton (Gossypium), or
(iii) a textile or fabric comprising or consisting of polyamide, and wherein polyamide is preferably selected from the group consisting of Polyamide 6 and Polyamide 6.6, or
(iv) a textile or fabric comprising or consisting of regenerated cellulose fibers like Viscose, Modal, Cupro, Lyocell.
